(19) Europäisches Patentamt
European Patent Office
Office européen des brevets

(11) **EP 2 975 587 B1**

(12) **EUROPEAN PATENT SPECIFICATION**

(45) Date of publication and mention
of the grant of the patent:
**31.01.2018 Bulletin 2018/05**

(21) Application number: **14765225.9**

(22) Date of filing: **12.03.2014**

(51) Int Cl.:
*H04Q 9/00* *(2006.01)*      *H04W 52/02* *(2009.01)*
*G06F 1/32* *(2006.01)*

(86) International application number:
**PCT/JP2014/056461**

(87) International publication number:
**WO 2014/142162 (18.09.2014 Gazette 2014/38)**

(54) **SENSOR TERMINAL**

SENSORTERMINAL

TERMINAL DE CAPTEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.03.2013 JP 2013051198**

(43) Date of publication of application:
**20.01.2016 Bulletin 2016/03**

(73) Proprietor: **Micromachine Center
Tokyo 101-0026 (JP)**

(72) Inventors:
• **ARAKAWA Masao
Tokyo 101-0026 (JP)**

• **SAKAMIZU Toshio
Tokyo 101-0026 (JP)**
• **TAKEDA Munehisa
Tokyo 101-0026 (JP)**

(74) Representative: **TBK
Bavariaring 4-6
80336 München (DE)**

(56) References cited:
**WO-A1-2007/102668      FR-A1- 2 969 281
JP-A- H10 198 883      JP-A- 2004 102 828
JP-A- 2005 100 443      JP-A- 2008 059 160
JP-A- 2012 195 705**

**Description**

Technical Field of the Invention

Our invention relates to a sensor terminal connectable to different types of sensors, which acquires and wirelessly transmits sensing data from the connected sensors to a predetermined destination.

Background Art of the Invention

Patent document 1 (JP2003-131708-A) discloses a sensor network system, to monitor a condition of each monitored devices or an environmental condition of each section such as commercial facility and factory provided with a plurality of sensor terminals provided here and there by analyzing sensing data which are sensed with the sensor terminals to wirelessly transmit to be received with a center device.

In the wireless sensor network system disclosed in Patent document 1, terminals distributed in a factory or plant connect some types of sensors and wirelessly transmit the sensing data sensed with the sensors to a central control device.

In the system in Patent document 1, a terminal device is provided with a connection terminal to connect a type of sensor selected from different types of sensors. The terminal device can commonly connect any types of sensors by inputting sensor detection information with input mode corresponding to sensor types of the sensor connected to the connector terminal.

Patent document 2 (JP2012-27519-A) discloses a wireless sensor network comprising sensor nodes that wirelessly transmits sensing data acquired with different types of detachable sensors implemented.

Patent document 3 (WO 2007/102668 A1) discloses a data logging apparatus provided with a separate power supply for driving external sensors, wherein the control unit of the main module is able to identify a sensor type.

Prior art documents

Patent documents

    Patent document 1: JP2003-131708-A
    Patent document 2: JP2012-27519-A
    Patent document 3: WO 2007/102668 A1

Summary of the Invention

Problems to be solved by the Invention

In such a wireless sensor network system capable of monitoring and controlling a condition of each section by collecting wirelessly transmitted data from the distributed sensor terminals, the sensor terminals are required to be connectable with different types of sensors. In the system disclosed in Patent document 1, a type of sensor selected from a plurality of types can be connected with a terminal device having a common specification without employing sensor terminals having a special specification for a predetermined type of sensor.

However in the system in Patent document 1, when different types of sensors are to be provided at the same place, the same number of terminal devices as the sensors have to be provided.

To provide such terminal devices, different types of detachable sensors can be implemented with a sensor node according to the implementation place according to the system disclosed in Patent document 2.

Generally, terminal devices and sensor nodes wirelessly transmit sensing data from implemented sensors intermittently for energy saving. It is desirable that such an intermittent wireless transmission has different cycles corresponding to sensor types. In a steady state, the intermittent wireless transmission cycle can be long since environmental temperature and humidity don't fluctuate greatly at the place. On the other hand, an electric current detection information as a benchmark of electricity consumption should be wirelessly transmitted frequently since the current fluctuates to flow through the power wire.

Therefore it is desirable that the sensor terminal such as sensor terminal device and sensor node sets a sensing data acquisition cycle and intermittent wireless transmission cycle according to implemented sensor types. However, Patent document 1 and Patent document 2 don't describe such a point at all.

Generally, to set the sensing data acquisition cycle and intermittent wireless transmission cycle according to implemented sensor types, a person to install sensor terminals may input the setting information into the sensor terminals. Alternatively, thus installed sensor terminals may be wirelessly connected to a center device to transmit the implemented sensor type information from the sensor terminals so that the center device transmits the setting information according to the sensor type information to the sensor terminals.

However in the first method, the person to install sensor terminals would have a troublesome task when inputting the setting information into many sensor terminals. Even by the second method to transmit the setting information of the sensing data acquisition cycle and intermittent transmission cycle of each sensor type to the sensor terminals from the center device, the sensor terminals are required to function to receive data from the center device while the installer of the sensor terminals is required to operate the installed sensor terminals to connect the center device through a wireless line. Such a method may be troublesome, too.

Further, processing sequences to acquire sensing data may be different depending on sensor types. For example, a carbon dioxide concentration sensor has to deaerate a previously sucked atmosphere to take in the atmosphere to be sensed. As described above, to connect different types of sensors with a sensor terminal, an appropriate schedule should execute a sequence of acquisition processing depending on sensors to acquire sensing data. Generally, such a schedule should be set by the installer depending on types of sensor connected to the sensor terminal, and therefore may be troublesome.

Accordingly, it could be helpful to provide a sensor terminal that only requires to install different types of sensors connected, without any operation such as setting and wireless connection to the center device.

Means for solving the Problems

To solve the above-described problems, our invention is a sensor terminal that is driven by a stand-alone power supply and is capable of connecting different types of sensors, acquiring and wirelessly transmitting a sensing data of the connected sensor, comprising:

a sensor connector part capable of connecting the sensors;
a condition information storing part that stores a condition information to generate a schedule information of intermittently acquiring the sensing data of each of the sensors and transmitting the acquired sensing data;
a sensor type discrimination means for discriminating a sensor type of the sensor connected to the sensor connector part to output a sensor type discrimination result;
a schedule information storing part that stores the schedule information of the connected sensor;
a schedule generation means for generating a schedule information by receiving the sensor type discrimination result of the sensor type from the sensor type discrimination means and acquiring the condition information of the connected sensor stored in the condition information storing part according to the sensor type discrimination result; and
a control means for controlling to acquire the sensing data and wirelessly transmit the acquired sensing data according to the schedule information stored in the schedule information storing part.

In the sensor terminal, when a sensor is connected to the sensor connector part, the sensor type discrimination means discriminates the type of the connected sensor and outputs the discrimination result. The schedule generation means receives the discrimination result of the sensor type, acquires the condition information of the sensor connected to the sensor connector part from the condition information storing part, and generates the schedule information of sensing data acquisition of the sensor connected to the sensor connector part and wireless transmission of the acquired sensing data to be stored in the schedule information storing part.

The control means accesses to the schedule information storing part, acquires the sensing data of the sensor and wirelessly transmits the acquired sensing data according to the schedule information of the connected sensor.

In the sensor terminal, when the sensor is connected to the sensor connector part, the sensor type is automatically discriminated and the schedule information of sensing data acquisition and wireless transmission is stored in the schedule information storing part. According to thus stored schedule information, the control means automatically executes the sensing data acquisition from the sensor and the wireless transmission of the acquired sensing data.

Namely, the sensor terminal automatically acquires and wirelessly transmits sensing data of the sensor by only connecting a sensor to the sensor connector part. By only connecting a sensor to a sensor terminal, acquisition and wireless transmission of sensing data of the connected sensor can be realized by so-called plug and play.

Effect according to the Invention

Our invention provides a sensor terminal such that acquisition and wireless transmission of sensing data of the connected sensor can be realized by so-called plug and play, by only connecting a sensor to a sensor terminal.

Brief explanation of the drawings

[Fig. 1] Fig. 1 is an explanatory diagram of schematic configuration according to an example of sensor network system comprising sensor terminals.
[Fig. 2] Fig. 2 is a diagram showing examples of format of data exchanged between sensor terminal and relay device, as well as relay device and a monitoring center device, in the sensor network system shown in Fig. 1.
[Fig. 3] Fig. 3 is a block diagram showing an example of a sensor terminal.
[Fig. 4] Fig. 4 is an explanatory diagram of an example of a part of the sensor terminal shown in Fig. 3.
[Fig. 5] Fig. 5 is an explanatory diagram of an example of sensor connected to the sensor terminal shown in Fig. 3 and a connector plug for the sensor.
[Fig. 6] Fig. 6 is an explanatory diagram of an example of a part of the sensor terminal shown in Fig. 3.
[Fig. 7] Fig. 7 is an explanatory diagram of an example of stand-alone power supply connected to the sensor terminal shown in Fig. 3 and a connector plug for the power supply.
[Fig. 8] Fig. 8 is an explanatory diagram of an example of a part of the sensor terminal shown in Fig. 3.

[Fig. 9] Fig. 9 is an explanatory diagram of an example of information stored in the sensor information storing part of the sensor terminal shown in Fig. 3.

[Fig. 10] Fig. 8 is an explanatory diagram of an example of sensor connected to the sensor terminal shown in Fig. 3.

[Fig. 11] Fig. 11 is a waveform for explaining the sensor shown in Fig. 10.

[Fig. 12] Fig. 12 is an explanatory diagram of an example of information stored in the stand-alone power supply information storing part of the sensor terminal shown in Fig. 3.

[Fig. 13] Fig. 13 is an explanatory diagram of an example of sensor connected to the sensor terminal shown in Fig. 3.

[Fig. 14] Fig. 14 is a partial flowchart explaining an example of operation of a power supply management processing function of a sensor terminal.

[Fig. 15] Fig. 15 is another partial flowchart explaining an example of operation of a power supply management processing function of a sensor terminal.

[Fig. 16] Fig. 16 is another partial flowchart explaining an example of operation of a power supply management processing function of a sensor terminal.

[Fig. 17] Fig. 17 is a flowchart explaining an example of power supply management schedule information on a stand-alone power supply of a sensor terminal.

[Fig. 18] Fig. 18 is another flowchart explaining an example of power supply management schedule information on a stand-alone power supply of a sensor terminal.

[Fig. 19] Fig. 19 is an explanatory diagram of an example of information stored in the schedule information storing part of a sensor terminal.

[Fig. 20] Fig. 20 is a flowchart explaining an example of operation of a schedule generation means of a sensor terminal.

[Fig. 21] Fig. 21 is a diagram showing an example of generated schedule information of a sensor terminal.

[Fig. 22] Fig. 22 is a diagram showing another example of generated schedule information of a sensor terminal.

[Fig. 23] Fig. 23 is a diagram showing yet another example of generated schedule information of a sensor terminal.

[Fig. 24] Fig. 24 is a partial flowchart explaining an example of wireless transmission processing and sensing data acquisition based on generated schedule information of a sensor terminal.

[Fig. 25] Fig. 25 is a partial flowchart explaining an example of wireless transmission processing and sensing data acquisition based on generated schedule information of a sensor terminal.

[Fig. 26] Fig. 26 is a diagram showing another example of main part of sensor terminal.

Embodiments for currying out the Invention

Hereinafter, embodiments of a sensor terminal will be explained with reference to figures for applications of wireless sensor network system monitoring an environmental condition and power consumption at each place in a monitored area.

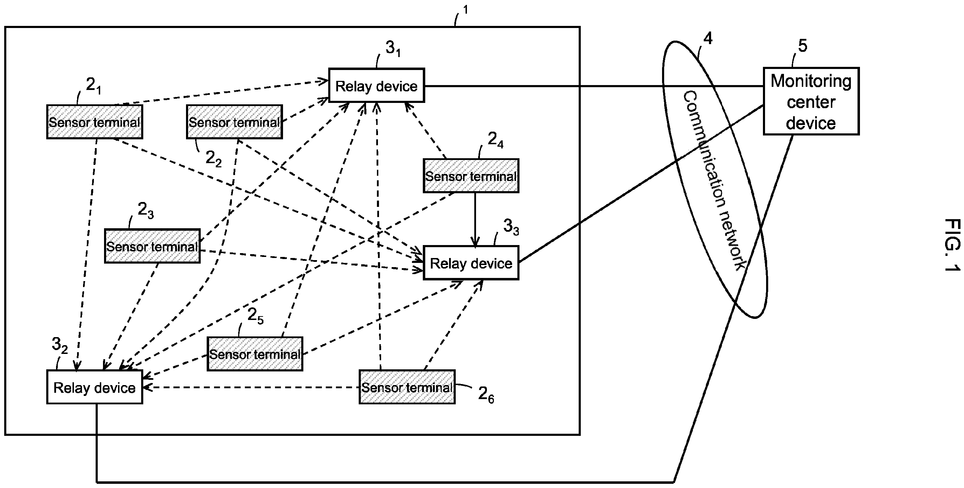

Fig. 1 is an explanatory diagram of a schematic configuration of sensor network system comprising sensor terminals.

In Fig. 1, area 1 surrounded by a rectangle is an area (which may be called "Monitored area" hereinafter) to be monitored in the system of this embodiment and may be a whole sales floor on the same floor of convenience stores, supermarkets or department stores. The area may be a factory or an office space. Monitored area 1 is not a flat area but a three-dimensional space area spreading in the lateral direction (X-direction), longitudinal direction (Y-direction) and height direction (Z-direction) that are orthogonal to each other. In Fig. 1, the height direction has been omitted. It is possible that monitored area 1 has any spatial shape, other than the rectangle prescribed in X-direction and Y-direction shown in Fig. 1.

In monitored area 1, a plurality of sensor terminals $2_1$-$2_n$ and a plurality of relay devices $3_1$-$3_m$ are provided. Sensor terminals $2_1$-$2_n$ may be provided at predetermined positions in monitored area 1 according to an environment monitoring plan formulated beforehand. To monitor different positions in detail of monitored area 1, many sensor terminals $2_1$-$2_n$ have to be provided at different positions in monitored area 1. In this embodiment, 1,000 (n = 1,000) of sensor terminals $2_1$-$2_n$ can be provided in monitored area 1. Due to limitations of space, six (n = 6) of sensor terminals $2_1$-$2_6$ provided in monitored area 1 are depicted in Fig. 1.

Each of sensor terminals $2_1$-$2_n$ has the same configuration and are driven by a stand-alone power supply. Therefore, each of sensor terminals $2_1$-$2_n$ will be indicated simply as sensor terminal 2 when the difference is not important.

Sensor terminal 2 can be connected to sensors sensing different objects at the same time. The object to be detected by sensors is an environmental element of spatial environment in monitored area 1, such as electric current in power supply line, temperature, dust, airflow, illumination and electric power consumption. Each sensor outputs sensing data of the detected object to sensor terminal 2. Sensor terminal 2 has functions to acquire sensing data of connected sensors at a predetermined timing and to wirelessly transmit the acquired sensing data together with identification data (sensor ID) indicating sensor types.

The stand-alone power supply is provided externally to sensor terminal 2. In this example, sensor terminal 2 can be connected to different power-generation types of stand-alone power supplies and has a function to discriminate the type of connected stand-alone power supply, as described later. In this embodiment, sensor terminal 2 can be connected to different types of stand-alone power supplies managed by a power supply management function at the same time.

In this embodiment, relay devices $3_1$-$3_m$ are provided in monitored area 1 at different positions for receiving wireless transmission signals from sensor terminals $2_1$-$2_n$ provided in monitored area 1. In this embodiment, each of relay devices $3_1$-$3_m$ is connected to monitoring center device 5 through communication network 4. Communication network 4 may be a wired communication network such as existing phone line, or may be a wireless communication network. Communication network 4 may have a configuration of LAN (Local Area Network) or WAN (Wide Area Network).

Each of relay devices $3_1$-$3_m$ receives transmission signals from sensor terminals $2_1$-$2_n$ and transfers the received transmission signals to monitoring center device 5 through communication network 4 after a predetermined information is added to the transmission signal. Relay devices $3_1$-$3_m$ have the same configuration, and therefore each of relay devices $3_1$-$3_m$ will be indicated simply as relay device 3 when the difference is not important.

Because each of relay devices $3_1$-$3_m$ receives transmission signals from a plurality of sensor terminals $2_1$-$2_n$ and transfers it to monitoring center device 5, transmission signals of up to the same number as relay devices $3_1$-$3_m$ are sent to monitoring center device 5 from the same sensor terminal. Each of relay devices $3_1$-$3_m$ may not receive wireless transmission signals from all sensor terminals 2 provided in monitoring area 1.

In this embodiment, sensor terminal 2 wirelessly transmits acquired sensing data intermittently to reduce power consumption of the stand-alone power supply. In this case, it is important that relay device 3 receives sensing data from sensor terminals 2 with certainty and reliability to be transferred to monitoring center device 5.

General conventional measures thereof are such that error detection codes are added to a transmission signal sent from sensor terminals. Alternatively, sensing data may be resent when an error is detected, or transmitters and receivers may be synchronized. However, the power consumption might increase because sensor terminal 2 has to be provided with a receiving part to receive error notices from relay device 3 if the sensing data is to be resent when an error is detected. Further, the power consumption might increase because the transmission information would increase by the error correction codes to increase the transmission time if the error detection codes are to be added to the transmission signal. Furthermore, a whole configuration might become complicated with a configuration necessary for the synchronization if the transmitters and receivers are to be synchronized.

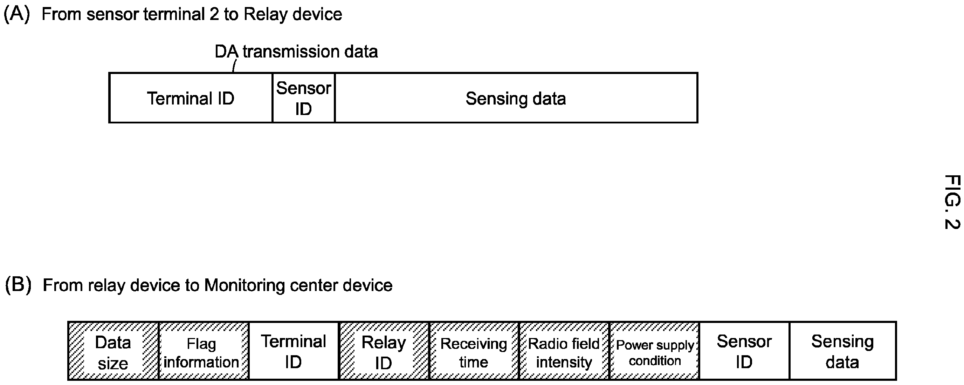

Accordingly, the wireless communication between sensor terminal 2 and relay device 3 is not synchronized, any error detection code is not added, and sensor terminals 2 don't have function to receive signals from relay devices 3, in this embodiment. As shown in Fig. 2 (A), sensor terminal 2 is configured simply to have function to send sensor terminal identification data (terminal ID), sensor identification signals (sensor ID above described) and sensing data without synchronization.

On the other hand, relay device 3 always monitors transmission signals from sensor terminals 2 and acquires the transmission signals when receipt of the transmission signals of sensor terminals 2 is determined so that transmission signals sent from sensor terminals without synchronization are transferred to monitoring center device 5.

This embodiment has been further improved to suppress power consumption of stand-alone power supply of sensor terminal 2 as much as possible.

As described later, since monitoring center device 5 is required to control sensing data from sensor terminal 2 as time-series data being stored corresponding to the acquisition time (occurrence time), sensing data from sensor terminal 2 should include information of the acquisition time. Ordinarily, the transmission signal including information of the acquisition time when sensor terminal 2 stored data from sensors is transferred through relay device 3 and communication network 4 to monitoring center device 5. However, as much information is transmitted from sensor terminal 2 the more electric power is consumed.

Accordingly, sensor terminal 2 transmits sensing data without including the information of acquisition time to relay device 3 in this embodiment. Then the receiving time of transmission signals of sensor terminal 2 by relay device 3 is regarded as an acquisition time of sensing data included in transmission signals from sensor terminal 2. The information of the receiving time is transferred to monitoring center device 5 together with the sensing data.

The acquisition time of sensing data employed by the monitoring center device 5 may be such time that the device receives transmission signals from sensor terminals.

As described later, monitoring center device 5 is informed of positions at which sensor terminals $2_1$-$2_n$ are provided in monitored area 1, so that environmental condition at different positions in monitored area 1 is determined in detail to visualize the environmental condition. That requires positional information of sensor terminals $2_1$-$2_n$ in monitored area 1. However, if the positional information of sensor terminals $2_1$-$2_n$ is included in the transmission signal, the power consumption increases as information transmitted from sensor terminals $2_1$-$2_n$ increases.

Accordingly, transmission signals of sensor terminals $2_1$-$2_n$ do not include the provision positional information in monitored area 1 in this embodiment. On the other hand, relay device 3 adds information for calculating positions to provide sensor terminals $2_1$-$2_n$ in monitored area 1 by monitoring center device 5.

In this example, since relay devices $3_1$-$3_m$ are provided at positions different to each other, the relay devices have different distances from sensor terminals $2_1$-$2_n$. The radio field intensity of transmission signals received from each of sensor terminals $2_1$-$2_n$ by each of relay devices $3_1$-$3_m$ corresponds to the distance between each of relay devices $3_1$-$3_m$ and each of sensor terminals $2_1$-$2_n$.

In this embodiment, relay device 3 detects the radio field intensity when it receives a transmission signal from sensor terminals $2_1$-$2_n$. Then relay device 3 adds information of the radio field intensity to received signals sent from sensor terminals $2_1$-$2_n$, and transfers it to monitoring center device 5.

Fig. 2 (B) shows a data format of data forwarded from relay device 3 to monitoring center device 5. In Fig. 2 (B), terminal ID, sensor ID and sensing data which are indicated in white backgrounds are data included in transmission data DA demodulated from wirelessly transmitted signal from sensor terminal 2.

Data size, flag information, relay device ID, receiving time, radio field intensity and power supply condition which are indicated in shaded backgrounds are data added by relay device 3. The data size is information showing a total data size of relay data forwarded from relay device 3 to monitoring center device 5. The flag information includes radio field intensity information and a flag showing that the power supply condition information is added to the relay data. The relay device ID is each identifier of relay devices $3_1$-$3_m$. The receiving time is a time to receive transmission data DA from sensor terminal 2. The radio field intensity is fixed when the transmission signal is received from sensor terminal 2. The power supply condition information is transmitted at an arbitral timing instead of sensing data of transmission data DA from sensor terminal 2.

In this embodiment, monitoring center device 5 uses information of the radio field intensity transmitted from each of relay devices $3_1$-$3_m$ as information for calculating positions to provide each of sensor terminals $2_1$-$2_n$ in monitored area 1. In other words, monitoring center device 5 calculates the distance between each of relay devices $3_1$-$3_m$ and each of sensor terminals $2_1$-$2_n$ with radio field intensity information sent from each of relay devices $3_1$-$3_m$. Positions at which relay devices $3_1$-$3_m$ are provided in monitored area 1 are registered in monitoring center device 5, so that monitoring center device 5 detects positions of sensor terminals $2_1$-$2_n$ in monitored area 1, from the positional information of relay devices $3_1$-$3_m$ as well as the distance between each of relay devices $3_1$-$3_m$ and each of sensor terminals $2_1$-$2_n$.

To detect positions (including height) of sensor terminals $2_1$-$2_n$ in monitored area 1 by monitoring center device 5, at least three of relay devices $3_1$-$3_m$ have to be provided in monitored area 1. In Fig. 1, only three relay devices $3_1$-$3_3$ are provided in monitored area 1 for convenience of explanation.

Thus sensor terminal 2 minimizes transmission amount of data sent out as much as possible to achieve low power consumption of the stand-alone power supply in this embodiment.

Monitoring center device 5 thus receives and collects sensing data sent from sensor terminals $2_1$-$2_n$ through relay devices $3_1$-$3_m$. As described above, the same information of the same sensor terminal 2 is sent from a plurality of relay devices 3 to monitoring center device 5. When monitoring center 5 receives a plurality of transmission signals of the same information of the same sensor terminal 2, it selects sensing data of the strongest radio field intensity to be accumulated with reference to radio field intensity information. Monitoring center device 5 accumulates time-series data of sensing data corresponding to information at such acquisition time that the information is added and received by relay devices $3_1$-$3_m$.

As described above, monitoring center device 5 extracts each radio field intensity of transmission signal of the same information content of the same sensor terminal 2 sent from relay devices $3_1$-$3_m$, and calculates and holds a position of each sensor terminal 2 in monitored area 1 with the extracted radio field intensity and the preliminarily stored positional information of relay devices $3_1$-$3_m$ in monitored area 1.

From the accumulated time-series sensing data of each sensor acquired from sensor terminals $2_1$-$2_n$ and the positional information of sensor terminals $2_1$-$2_n$ in monitored area 1, environmental information determined with the sensing data is converted to visualized display information and displayed on the display screen.

An operator of monitoring center device 5 can comprehend the time-series variation of environmental information acquired from the sensing data in monitored area 1 by seeing the visualized information on the display screen. With such an comprehension result, the operator can appropriately give instructions based on a decision made according to environmental changes in monitored area 1.

The above-described embodiment of sensor network system can display the visualized sensing data including time-series variation of many sensor terminals 2 provided in monitored area 1 having environment condition varying depending on positions in monitored area 1, so that detailed environment condition is monitored in monitored area 1.

[Explanation of sensor terminal 2: embodiments of sensor terminal 2]

Hereinafter, embodiments of sensor terminal applied to the system explained above will be explained in details of configuration and processing operation.

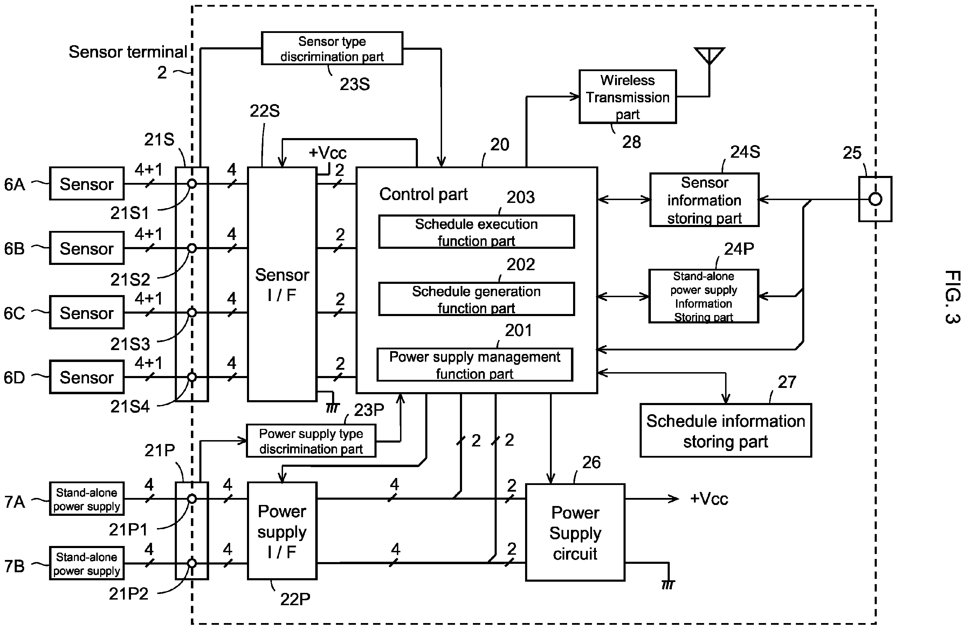

Fig. 3 is a block diagram showing a hardware configuration example of sensor terminal 2. As shown in Fig. 3, sensor terminal 2 has control part 20 which controls a whole sensor terminal 2 and comprises a microcomputer. Sensor terminal 2 comprises sensor connector part 21S, sensor interface 22S, sensor type discrimination part 23S, and sensor information storing part 24S, power supply connector part 21P, power supply interface 22P, power supply type discrimination part 23P, stand-alone power supply information storing part 24P, information input terminal 25 and power supply circuit 26. Sensor terminal 2 further comprises schedule information storing part 27 and wireless transmission part 28.

In this embodiment of sensor terminal 2, 4 types of sensors 6A, 6B, 6C and 6D can be connected to sensor connector part 21S at the same time while two types of stand-alone power supplies 7A and 7B can be connected to power supply connector part 21P at the same time. Therefore, sensor connector part 21S comprises four connector jacks 21S1, 21S2, 21S3 and 21S4. Power supply connector part 21P comprises two connector jacks 21P1 and 21P2.

For example, sensor 6A may be an electric current sensor to detect electric current flowing in power supply lines, sensor 6B may be an infrared array sensor (temperature sensor), sensor 6C may be a carbon dioxide concentration sensor, sensor 6D may be a VOC (Volatile Organic Compounds) concentration sensor.

Stand-alone power supply 7A is configured as a stand-alone power supply module of solar battery which generates electricity by receiving light from the sun or a fluorescent lamp and is provided with a charge circuit (power storage circuit). Stand-alone power supply 7B is configured as a stand-alone power supply module which generates electricity by vibrating and is provided with a charge circuit (power storage circuit).

The charge circuit (power storage circuit) may be incorporated by sensor terminal 2. In that case, sensor terminal 2 may incorporate the charge circuit (power storage circuit) provided for each stand-alone power supply or commonly provided for a plurality of types of power supplies. When the charge circuit (power storage circuit) is commonly provided for a plurality of types of stand-alone power supplies, sensor terminal 2 may incorporate another charge circuit for an auxiliary power supply in addition to the commonly provided charge circuit.

The above-described number of connectable sensor types and power supply types are just random examples and may be different numbers.

In Fig. 3, four types of sensors 6A, 6B, 6C and 6D are connected to sensor connector part 21S of sensor terminal 2 at the same time. Alternatively, it is possible that one, two or three types among sensors 6A, 6B, 6C and 6D are connected to sensor terminal 2. Similarly, one or two types of stand-alone power supplies 7A and 7B can be connected to power supply connector part 21P.

[Configuration examples of sensor connector part 21S, sensor type discrimination part 23S and connector plug of sensor]

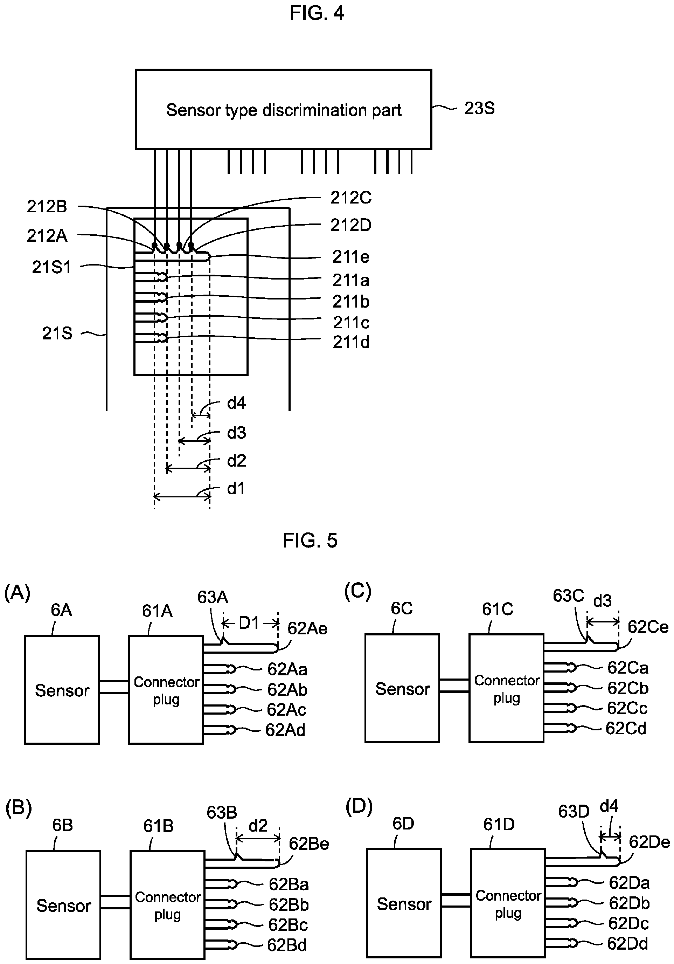

Four connector jacks 21S, 21S2, 21S3 and 21S4 of sensor connector part 21S1 have the same configuration. Fig. 4 depicts a configuration example of connector jack 21S1 representing four connector jacks 21S1, 21S2, 21S3 and 21S4.

Connector jack 21S1 comprises four pin jacks 211a, 211b, 211c and 211d for supplying electricity to any of sensors 6A - 6D connected and exchanging signals with the connected sensors 6A - 6D. In this example, pin jack 211a is an anode side terminal of the power supply voltage applied to a sensor while pin jack 211d is a cathode side terminal (ground terminal). Pin jack 211b is an input terminal to receive sensing data from a sensor while pin jack 211c is an output terminal to provide control signals to a sensor.

In this embodiment, connector jack 21S1 comprises pin jack 211e for discriminating among sensor types of sensors 6A - 6D connected.

Each of pin jacks 211a, 211b, 211c, 211d and 211e is configured as capable of fitting with each of five pin plugs of connector plugs for sensors 6A - 6D described later so that electrical connection is built by inserting the plugs.

Pin jacks 211a, 211b, 211c and 211d have the same configuration with an electrical connection part to electrically connect an inserted plug pin with sensor type discrimination part 23S of internal circuit of sensor terminal 2.

Pin jack 211e for sensor type discrimination has a configuration different from that of pin jacks 211a, 211b, 211c and 211d. As shown in Fig. 4, terminals 212A, 212B, 212C and 212D (which may be called "Recessed part terminals) are provided as electrically unconnected to each other on four recessed parts at positions d1, d2, d3 and d4 (d1 ≠ d2 ≠ d3 ≠ d4) having different distances from the bottom of a hole of which inner wall constitutes pin jack 211e. Such recessed part terminals 212A, 212B, 212C and 212D are electrically connected to sensor type discrimination part 23S.

As described above, other three connector jacks 21S2 - 21S4 of sensor connector part 21S have the same configuration as connector jack 21S1. Four recessed part terminals 212A, 212B, 212C and 212D of pin jack 211e for sensor type discrimination are connected to sensor type discrimination part 23S.

As shown in Fig. 5 (A) - (D), each of four types of sensors 6A, 6B, 6C and 6D has connector plug 61A, 61B, 61C or 61D as a connection means to sensor terminals 2 capable of fitting with any of four connector jacks 21S1 - 21S4 of sensor connector part 21S by inserting the plugs. In Fig. 5, each of sensors 6A, 6B, 6C and 6D is configured to have a configuration provided with connector plug 61A, 61B, 61C or 61D connected through a connection cable. Alternatively, each of sensors 6A, 6B, 6C and 6D may have a housing provided with a connector part similar to connector plug 61A, 61B, 61C or 61D.

Each of connector plugs 61A, 61B, 61C and 61D comprises a set of four pin plugs 62Aa - 62Ad, 62Ba - 62Bd, 62Ca - 62Cd or 62Da - 62Dd electrically connected to an internal circuit of sensor terminal 2 by inserting the connector plugs to fit with four pin jacks 211a, 211b, 211c and 211d selected from four connector jacks 21S1 - 21 S4 of sensor connector part 21S.

These sets of four pin plugs 62Aa - 62Ad, 62Ba - 62Bd, 62Ca - 62Cd and 62Da - 62Dd have entirely the same configuration for connector plugs 61A, 61B, 61C and 61D. In this example, pin plugs 62Aa, 62Ba, 62Ca and 62Da are connected to power supply lines of sensors 6A, 6B, 6C and 6D. Pin plugs 62Ad, 62Bd, 62Cd and 62Dd are connected to ground terminals of sensor 6A, 6B, 6C and 6D. Pin plugs 62Ab, 62Bb, 62Cb and 62Db are connected to output terminals of sensing data sensed with sensors 6A, 6B, 6C and 6D. Pin plugs 62Ac, 62Bc, 62Cc and 62Dc are connected to input terminal of sensors 6A, 6B, 6C and 6D to receive control signals from sensor terminal 2.

Each of connector plugs 61A, 61B, 61C and 61D has pin plug 62Ae, 62Be, 62Ce or 62De for sensor type discrimination having different configurations depending on sensor types.

In this example, pin plug 62Ae for sensor type discrimination of connector plug 61A of sensor 6A has terminal (which may be called "Protrusion terminal") 63A that is formed as a protrusion engaged with recessed part terminal 212A of pin jack 211e of connector jacks 21S1 - 21 S4 at distance d1 from the tip. Pin plug 62Be for sensor type discrimination of connector plug 61B of sensor 6B has protrusion terminal 63B engaged with recessed part terminal 212B of pin jack 211e of connector jacks 21S1 - 21S4 at distance d2 from the tip. Pin plug 62Ce for sensor type discrimination of connector plug 61C of sensor 6C has protrusion terminal 63C engaged with recessed part terminal 212C of pin jack 211e of connector jacks 21S1 - 21S4 at distance d3 from the tip. Pin plug 62De for sensor type discrimination of connector plug 61D of sensor 6D has protrusion terminal 63D engaged with recessed part terminal 212D of pin jack 211e of connector jacks 21S1 - 21 S4 at distance d4 from the tip.

Connector plugs 61A, 61B, 61C and 61D have protrusion terminals 63A, 63B, 63C and 63D which is connected to ground terminals of sensors 6A, 6B, 6C and 6D or the like and is provided on pin plugs 62Ae, 62Be, 62Ce and 62De for sensor type discrimination.

An example method to discriminate sensor types with sensor type discrimination part 23S of sensor terminal 2 will be explained.

When any one of connector plugs 61A, 61B, 61C and 61D of sensors 6A, 6B, 6C and 6D is not connected to connector jacks 21S1, 21S2, 21S3 and 21S4 of sensor connector part 21S, four recessed part terminals 212A, 212B, 212C and 212D of pin jack 211e for sensor type discrimination of connector jacks 21S1 - 21S4 have a high impedance because of no connection.

On the other hand, when connector plug 61A of sensor 6A, selected from connector plugs 61A, 61B, 61C and 61D of sensors 6A, 6B, 6C and 6D, is connected to connector jack 21S1 selected from 21S1, 21 S2, 21S3 and 21 S4 of sensor connector part 21S, protrusion terminal 63A of pin plug 62Ae for sensor type discrimination of connector plug 61A connected is connected as fitted with recessed part terminal 212A of pin jack 211e for sensor type discrimination of connector jack 21S1.

Because protrusion terminal 63A is connected to a ground terminal of sensor 6A, sensor type discrimination part 23S detects a change of recessed part terminal 212A of pin jack 211e for sensor type discrimination of connector jack 21S1 from a high impedance to a low impedance. In this example, to detect the impedance change with sensor type discrimination part 23S of sensor terminal 2, a predetermined voltage is applied to each of four recessed part terminals 212A, 212B, 212C and 212D of pin jack 211e of connector jacks 21S1 - 21S4.

Sensor type discrimination part 23S detects any one of recessed part terminals 212A - 212D of the pin jack for sensor type discrimination of each connector jack 21S1 - 21S4 having impedance change from a high impedance to a low impedance, so as to detect any one of sensors 6A - 6D connected to each connector jack 21S 1 - 21S4. For such a connector jack as connected to any one of sensors 6A - 6D, sensor type discrimination part 23S discriminates the connected sensor among sensor types of 6A, 6B, 6C and 6D according to the one of four recessed part terminals 212A - 212D which has the change from a high impedance to a low impedance. Then, sensor type discrimination part 23S outputs information of the sensor connection detection and the connected sensor type to control part 20 as discrimination result information.

[Configuration examples of power supply connector part 21P, power supply type discrimination part 23P and connector plug of stand-alone power supply]

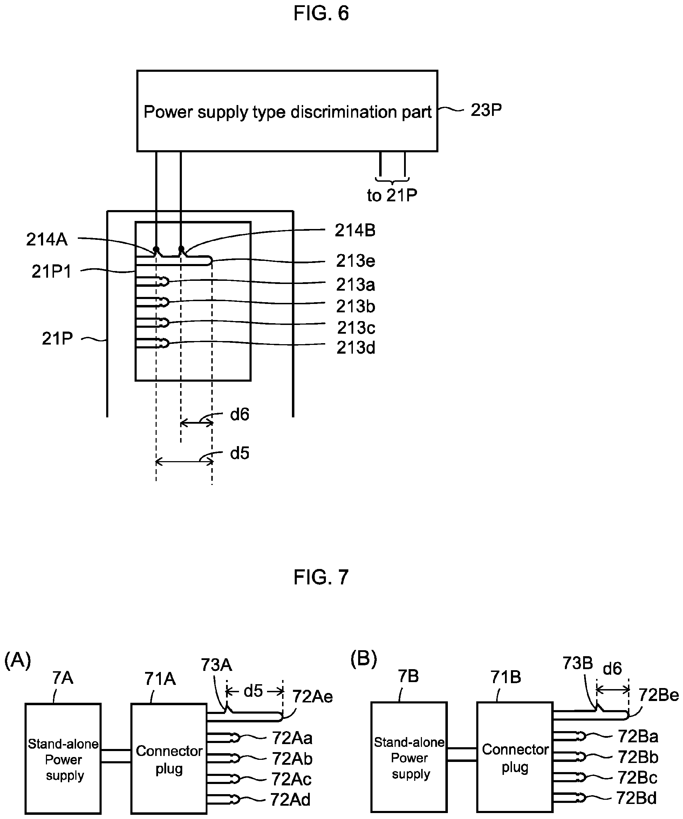

Next, configurations of power supply connector part 21P and power supply type discrimination part 23P will be explained with reference to Fig. 6 and Fig. 7.

Power supply connector part 21P comprises two connector jacks 21P1 and 21P2 since two types of stand-alone power supplies 7A and 7B can be connected to sensor terminals 2. Two connector jacks 21P1 and 21P2 of power supply connector part 21P have the same configuration. Fig. 6 depicts a configuration example of connector jack 21P1 representing two connector jacks 21P1 and 21P2. Fig. 7 depicts a configuration example of connector plugs 71A and 71B connected to two types of stand-alone power supplies 7A and 7B.

As shown in Fig. 6 and Fig. 7, power supply connector part 21P and connector plugs 71A and 71B of stand-alone power supply 7A and 7B have a configuration similar to the configuration of the above-described sensor connector part 21S and connector plugs 61A - 61D of four types of sensors 6A - 6D.

In other words, connector jack 21P1 comprises four pin jacks 213a, 213b, 213c and 213d for supplying electricity from stand-alone power supply 7A or 7B and exchanging signals with the connected stand-alone power supply 7A or 7B. In this example, pin jack 213a is a supply terminal of the power supply voltage from stand-alone power supply 7A or 7B while pin jack 213d is a cathode side terminal (ground terminal). Pin jack 213b is an input terminal to receive predetermined data from stand-alone power supply 7A or 7B while pin jack 213c is an output terminal to provide control signals to stand-alone power supply 7A or 7B.

Connector plugs 71A and 71B comprise pin plugs 72Ae and 72Be for power supply type discrimination having different configurations depending on types of stand-alone power supplies.

Just like sensor connector part 21S for power supply connector part 21P, each of pin jacks 213a, 213b, 213c, 213d and 213e is configured as capable of fitting with each of five pin plugs of connector plugs 71 and 71B of stand-alone power supplies 7A and 7B described later so that electrical connection is built by inserting the plugs. Pin jacks 213a, 213b, 213c and 213d have the same configuration provided with an electrical connection part to electrically connect an inserted plug pin with the internal circuit.

Pin jack 213e for power supply type discrimination has the same configuration as pin jack 211e. It is sufficient that two types of stand-alone power supplies 7A and 7B are discriminated. As shown in Fig. 6, terminals 214A and 214B (which may be called "Recessed part terminal") are provided as electrically unconnected to each other on two recessed parts at positions d5 and d6 (d5 ≠ d6) having different distances from the bottom of a hole of which inner wall constitutes pin jack 213e. Such recessed part terminals 214A and 214B are electrically connected to power supply types discrimination part 23S.

As described above, other connector jack 21P2 of power supply connector part 21P has the same configuration as connector jack 21P1 shown in Fig. 6 while two recessed part terminals 214A and 214B of pin jack 213e for sensor type discrimination are connected to power supply type discrimination part 23P as shown in Fig. 6.

As shown in Fig. 7 (A) and (B), two types of stand-alone power supplies 7A and 7B have connector plugs 71A and 71B as a connection means to sensor terminals 2 capable of fitting with any of connector jacks 21P1 and 21P2 of power supply connector part 21S by inserting the plugs. In Fig. 7, stand-alone power supplies 7A and 7B are configured to have configurations provided with connector plugs 71A and 71B connected through a connection cable. Alternatively, stand-alone power supplies 7A and 7B may have a housing provided with a connector part similar to connector plugs 71A and 71B.

Each of connector plugs 71A and 71B comprises a set of four pin plugs 72Aa - 72Ad or 72Ba - 72Bd electrically connected to an internal circuit of sensor terminal 2 by inserting the connector plugs to fit with four pin jacks 213a, 213b, 213c and 213d selected from four connector jacks 21P1 and 21P2 of power supply connector part 21P of sensor terminal 2.

These sets of four pin plugs 72Aa - 72Ad, 72Ba-72Bd, 72Ca - 72Cd and 72Da-72Dd have entirely the same configuration for connector plugs 71A and 71B. In this example, pin plugs 72Aa and 72Ba are connected to power supply terminals of power supplies 7A and 7B. Pin plugs 72Ad and 72Bd are connected to ground terminals of power supplies 7A and 7B. Pin plugs 72Ab and 72Bb are connected to output terminals of output data of stand-alone power supplies 7A and 7B. Pin plugs 72Ac and 72Bc are connected to input terminal of stand-alone power supplies 7A and 7B to receive control signals from sensor terminal 2.

Each of connector plugs 71A and 71B has pin plug 72Ae or 72Be for power supply type discrimination having different configurations depending on power supply types.

In this example, pin plug 72Ae for power supply type discrimination of connector plug 71A of stand-alone power supply 7A has protrusion terminal 73A engaged with recessed part terminal 214A of pin jack 213e of connector jacks 21P1 and 21P2 at distance d5 from the tip. Pin plug 72Be for power supply type discrimination of connector plug 71B of stand-alone power supply 7B has protrusion terminal 73B engaged with recessed part terminal 214B of pin jack 213e of connector jacks 21P1 and 21P2 at distance d6 from the tip.

Connector plugs 71A and 71B have protrusion terminals 73A and 73B which are connected to a power supply terminal of stand-alone power supplies 7A and 7B or the like and are provided on pin plugs 72Ae and 72Be for power supply type discrimination.

An example method to discriminate power supply types with power supply type discrimination part 23P of sensor terminal 2 will be explained. When any one of connector plugs 71A and 71B of stand-alone power supplies 7A and 7B is not connected to connector jacks 21P1 and 21P2 of power supply connector part 21P, two recessed part terminals 214A and 214B of pin jack 213e for power supply type discrimination of connector jacks 21P1 and 21P2 have a high impedance because of no connection.

On the other hand, when connector plug 71A of stand-alone power supply 7A, selected from connector plugs 71A and 71B of stand-alone power supplies 7A or 7B, is connected to connector jack 21P1 selected from 21P1 and 21P2 of power supply connector part 21P, protrusion terminal 73A of pin plug 72Ae for power supply type discrimination of connector plug 71A connected is connected as fitted with recessed part terminal 214A of pin jack 213e for power supply type discrimination of connector jack 21P1.

Because protrusion terminal 73A is connected to a power supply terminal of stand-alone power supply 7A, power supply type discrimination part 23P detects a power supply voltage of recessed part terminal 214A of pin jack 213e for power supply type discrimination of connector jack 21P1.

Thus sensor type discrimination part 23P detects recessed part terminal 214A or 214B of pin jack 213e for power supply type discrimination of each connector jack 21P1 or 21P2 having the power supply voltage, so as to detect stand-alone power supply 7A or 7B connected to each connector jack 21P1 or 21P2. For such connector jack 21P1 or 21P2 as connected to stand-alone power supply 7A or 7B, power supply type discrimination part 23P discriminates the power supply type of connected stand-alone power supply 7A or 7B according to the one of two recessed part terminals 214A and 214B which has detected the power supply voltage. Then, power supply type discrimination part 23P outputs information of the power supply connection detection and the connected power supply type of stand-alone power supply 7A or 7B to control part 20 as discrimination result information.

[Configuration examples of sensor interface 22S and power supply interface 22P]

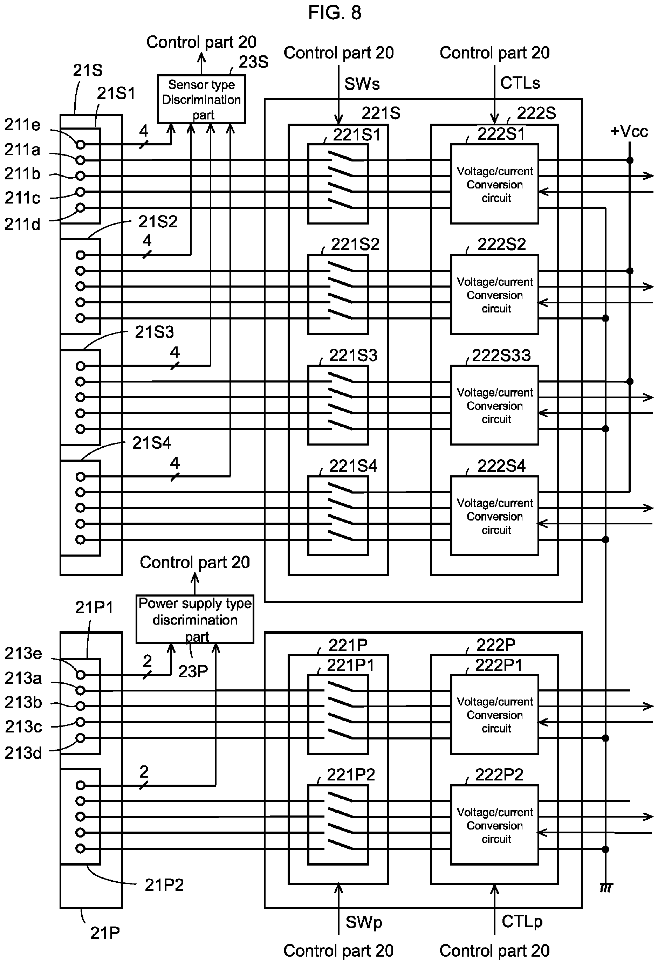

Fig. 8 shows a configuration example of sensor interface 22S and power supply interface 22P.

Sensor interface 22S consists of sensor operation control circuit 221S and signal processing circuit 222S. Sensor operation control circuit 221S consists of four switch circuits 221S1, 221S2, 221 S3 and 221S4 in this example. Each of switch circuits 221S1, 221S2, 221S3 and 221S4 is comprised of four switch elements. In this example, signal processing circuit 222S consists of four voltage/current conversion circuits 222S1, 222S2, 222S3 and 222S4.

As shown in Fig. 8, each of four connector jacks 21S1, 21S2, 21S3 and 21S4 of sensor connector part 21S1 is connected to each of voltage/current conversion circuits 222S1 222S, 222S2, 222S3 and 222S4 of signal processing circuit 222S through each of switch circuits 221S1, 221S2, 221 S3 and 221S4. Each of four pin jacks 211a, 211b, 211c and 211d of each of connector jacks 21S 1 - 21S4 except for pin jack 211e for sensor type discrimination is connected to each of voltage/current conversion circuits 222S1, 222S2, 222S3 and 222S4 of signal processing circuit 222S through each of four switch elements of each of switch circuits 221S1, 221S2, 221S3 and 221S4.

Switch circuits 221S1, 221S2, 221S3 and 221S4 of sensor operation control circuit 221S can independently be controlled according to switch control signal SWs of control part 20. Control part 20 can perform ON-OFF control of four switch elements of each of switch circuits 221S1, 221S2, 221 S3 and 221S4 independently from each other, according to switch control signal SWs. It is possible that pin jack 211d connected to a ground terminal is always turned ON.

Control part 20 performs the ON-OFF control of any one of switch circuits 221S1, 221S2, 221S3 and 221S4 connecting any one of connector jack 21S1, 21S2, 21 S3 and 21S4 connected to a type of sensor according to a discrimination result of sensor type discrimination part 23S. As described later, control part 20 performs the ON/OFF control of any one of switch circuits 221S1, 221S2, 221S3 and 221S4 connecting the connector jack recognized as connecting the sensor according to a wireless transmission schedule and a sensing data acquisition schedule depending on sensor types.

Each of voltage/current conversion circuits 222S1 - 222S4 of signal processing circuit 222S converts the voltage and electric current to exchange signals between control part 20 and the sensor connected to each of connector jacks 21S1 - 21S4 of sensor connector part 21S. In this embodiment, sensors 6A - 6D connected to sensor terminal 2 can be a type to output analog signals of sensing data or another type to output digital signals of sensing data.

Therefore, voltage/current conversion circuits 222S1 - 222S4 of signal processing circuit 222S have a function to provide digital signals of sensing data to control part 20 as well as another function to convert analog signals of sensing data to digital signals to be provided to control part 20.

Then, control part 20 recognizes if the sensor connected to connector jacks 21S1 - 21S4 of sensor connector part 21S is a type to output analog signals of sensing data or another type to output digital signals of sensing data according to the discrimination result of sensor type discrimination part 23S and sensor information of sensors 6A - 6D stored in sensor information storing part 24S. According to the recognition result, control part 20 generates control signal CTLs and provides control signal CTLs to voltage/current conversion circuits 222S1 - 222S4 of signal processing circuit 222S.

Voltage/current conversion circuits 222S1 - 222S4 of signal processing circuit 222S can select a processing function suitable for digital or analog signal of sensing data according to control signal CTLs.

When control part 20 provides control signals to sensors through sensor interface 22S, voltage/current conversion circuits 222S1 - 222S4 of signal processing circuit 222S switch a signal processing function for the sensors to receive digital or analog signal of control signals according to control signal CTLs of control part 20.

Power supply interface 22P consists of stand-alone power supply operation control circuit 221P and voltage/current conversion circuit 222P. Stand-alone power supply operation control circuit 221P consists of two switch circuits 221P1 and 221P2 in this example. Each of switch circuits 221P1 and 221P2 is comprised of four switche elements like the above-described switch circuits 221S1 - 221S4. In this example, signal processing circuit 222P consists of two voltage/current conversion circuits 222P1 and 222P2.

As shown in Fig. 8, each of two connector jacks 21P1 and 21P2 of power supply connector part 21S1 is connected to each of voltage/current conversion circuits 222P1 and 222P2 of signal processing circuit 222P through each of switch circuits 221P1 and 221P2. Each of four pin jacks 213a, 213b, 213c and 213d of each of connector jacks 21P1 and 21P2 except for pin jack 213e for stand-alone power supply type discrimination is connected to each of voltage/current conversion circuits 222P1 and 222P2 of signal processing circuit 222P through each of four switch elements of each of switch circuits 221P1 and 221P2.

Switch circuits 221P1 and 221P2 of stand-alone power supply operation control circuit 221P can independently be controlled according to switch control signal SWp of control part 20. Control part 20 can perform ON-OFF control of four switch elements of each of switch circuits 221P1 and 221P2 independently from each other, according to switch control signal SWp. Switch circuits 221P1 and 221P2 are turned ON in an initial condition where a stand-alone power supply is not connected to corresponding connector jack of power supply connector part 21P.

Control part 20 performs the ON-OFF control of any one of switch circuits 221P1 and 221P2 connecting connector jack 21P1 or 21P2 connected to a type of stand-alone power supply according to a discrimination result of power supply type discrimination part 23P.

Control part 20 turns ON all of the four switch elements of switch circuits 221P1 and 221P2 connecting the connector jack recognized as connecting the stand-alone power supply according to the discrimination result of power supply discrimination part 23P.

As described later, control part 20 turns OFF the switch element connecting to pin jacks 213a and 213d of switch circuits 221P1 and 221P2 to charge the stand-alone power supply according to a power supply management function of stand-alone power supply such as controlling the stand-alone power supply connected in case of low voltage.

Each of voltage/current conversion circuits 222P1 and 222P2 of signal processing circuit 222P converts the voltage and electric current to exchange signals between control part 20 and the stand-alone power supply connected to each of connector jacks 21P1 and 21P2 of power supply connector part 21P. In this embodiment, voltage/current conversion circuits 222P1 and 222P2 of signal processing circuit 222P can select a processing function of signals exchanged between sensor terminal 1 and connected stand-alone power supplies 7A and 7B, according to the type of analog or digital signal.

Control part 20 recognizes if the stand-alone power supply connected to connector jacks 21P1 and 21P2 of power supply connector part 21P is a type to exchange analog signals or another type to exchange digital signals according to the discrimination result of power supply type discrimination part 23P and power supply information of stand-alone power supplies 7A and 7B stored in power supply information storing part 24P, as described later. According to the recognition result, control part 20 generates control signal CTLp and provides control signal CTLp to voltage/current conversion circuits 222P1 and 222P2 of signal processing circuit 222P.

Voltage/current conversion circuits 222P1 and 222P2 of signal processing circuit 222P can select a processing function suitable for digital or analog signal exchanged.

Even the above-described control of the switch circuits based on the charged voltage level is performed according to the discrimination result of power supply type discrimination part 23P and power supply information of stand-alone power supplies 7A and 7B stored in power supply information storing part 24P.

[Information stored in sensor information storing part 24S]

In this example, sensor information of four types of sensors 6A, 6B, 6C and 6D is stored in sensor information storing part 24S. Such sensor information stored in sensor information storing part 24S includes information of condition for generating a schedule information to acquire sensing data of each of sensors 6A, 6B, 6C and 6D and wirelessly transmit the sensing data acquired.

In this example, such schedule information includes information for determining a cycle of acquiring intermittent sensing data and performing the wireless transmission, as well as sequence information of each data acquisition and wireless transmission.

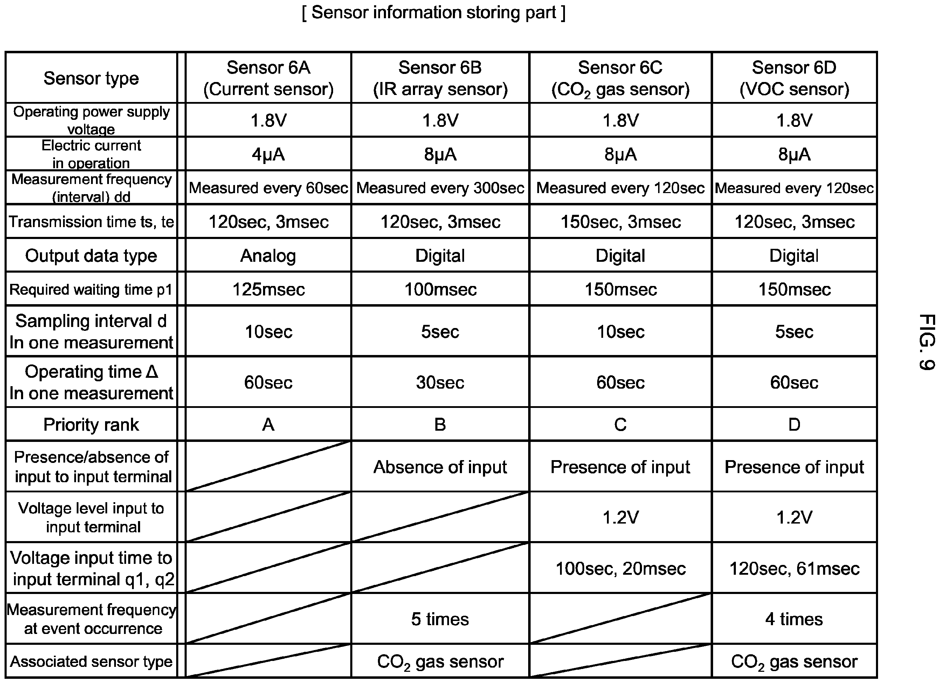

Fig. 9 shows an example of sensor information stored in sensor information storing part 24S in this embodiment. In this embodiment, information shown in the leftmost column of Fig. 9 is stored as sensor information of four types of sensors 6A, 6B, 6C and 6D. It is not necessary that all of these information is stored for four types of sensors 6A, 6B, 6C and 6D. Some information may not be stored depending on sensor types.

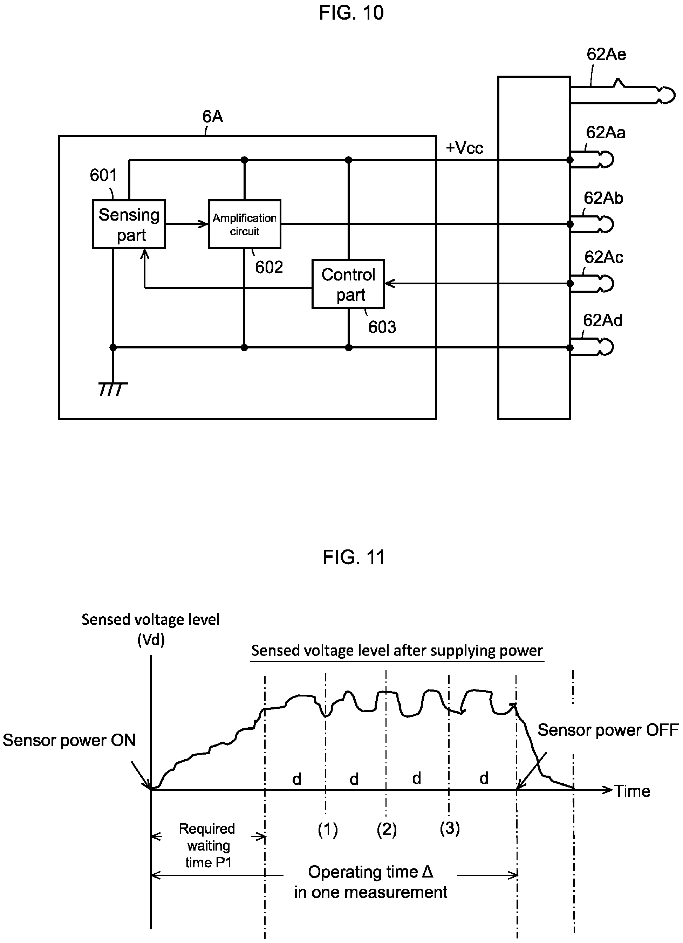

Each sensor information shown in Fig. 9 will be explained with reference to examples of sensor configuration shown in Fig. 10 and sensing data shown in Fig. 11. Fig. 10 shows a configuration example having a basic function common among four types of sensors 6A, 6B, 6C and 6D. For convenience, Fig. 10 shows a configuration example of sensor 6A. In the following explanation with reference to Fig. 10, each part of sensor 6A will be mentioned so that the explanation is also applicable to other sensors 6B - 6D.

As shown in Fig. 10, sensor 6A consists of sensing part 601 to sense a sensing object, amplification circuit 602 to amplify the sensing data sensed with sensing part 601 to be output, and control part 603 to control sensing part 601. When sensor 6A is connected to sensor terminal 2, power supply voltage Vcc is supplied from sensor terminal 2 between pin plug 62Aa and pin plug 62Ad while the power supply voltage Vcc is supplied to sensing part 601, amplification circuit 602 and control part 603. The sensing data is provided from amplification circuit 602 to pin plug 62Ab while a control signal input into pin plug 62Ac from sensor terminal 2 is provided to control part 603.

Fig. 11 shows an example of waveform change of sensing voltage Vd sensed with sensing part 601 after turning on sensor 6A.

In Fig. 9, "Operating power supply voltage" as sensor information means a level of the power supply voltage capable of operating the sensor. "Electric current in operation" means an electric current in operation under the operating power supply voltage. Sensor terminal 2 is provided with a overcurrent prevention circuit for stopping power supply between pin plug 62Aa and pin plug 62Ad by controlling the switch circuit of operation control circuit 211S of sensor interface 21S in case of excessive current much greater than the "Electric current in operation" as well as a monitoring circuit of the electric current in operation under the power supply voltage supplied.

"Measurement frequency (interval)" means information of frequency to acquire sensing data from sensors and wirelessly transmit the sensing data acquired. It is possible to perform the acquisition of sensing data from sensors separately from the wireless transmission of sensing data acquired. However in this example, a sequence from the acquisition of sensing data from sensors to the wireless transmission is performed at each timing according to the "Measurement frequency (interval)". The "Measurement frequency (interval)" is defined as "Measured every dd sec of cycle (cycle of intermittent measurement)".

The "Measurement frequency (interval)" means information (which may be called usual measurement frequency) for operating sensors in a usual condition. As described later, even "Measurement frequency at event occurrence" is stored as sensor information in this embodiment.

"Transmission time" means information for identifying when to wirelessly transmit sensing data. The information of "Transmission time" includes starting time ts of wireless transmission on the basis of intermittent sensor operation starting time (power supply starting time) and time te from the starting time to finishing time of the wireless transmission.

"Output data type" means information of analog or digital signals of sensing data to be output.

"Required waiting time" means time p1 to spend from supplying power to sensors until voltage level sensed with sensing part 601 becomes stable as shown in Fig. 11. The voltage level sensed with sensing part 601 is unstable and inaccurate as sensing data within required waiting time p1 as shown in Fig. 11, so that the measurement should be disregarded.

"Sampling interval in one measurement" means sampling interval d of voltage level sensed with sensing part 601. The "Sampling interval in one measurement" is defined as sampling cycle d shown in Fig. 11. As shown in Fig. 11, sensor 6A outputs to sensor terminal 2 an average value as sensing data calculated from measured values of three times of sampling.

"Operating time in one measurement" means information of time $\Delta$ required for completing the acquisition of sensing data from sensor 6A. Fig. 11 shows that the power supply from sensor terminal 2 to sensor 6A is stopped when time $\Delta$ of the "Operating time in one measurement" passes from supplying power from sensor terminal 2 to sensor 6A.

"Priority rank" means information for deciding a priority between sensors to be operated. For example, the ranking is defined as "Priority A > Priority B > Priority C ...".

"Presence/absence of input to input terminal" means information about whether control part 603 has a function to accept input signals of control signals from sensor terminal 2 through pin plug 62Ac. "Presence of input" indicates that control part 603 has a function to accept control signals while "Absence of input" indicates that control part 603 doesn't have a function to accept control signals.

"Voltage level input to input terminal" means information indicating a voltage level of control signal in the case of "Presence of input" for the "Presence/absence of input to input terminal". "Voltage input time to input terminal" means information of time to accept control signal voltage in the case of "Presence of input" for the "Presence/absence of input to input terminal". Information of the "Voltage input time to input terminal" includes voltage supply starting time q1 of input terminal on the basis of intermittent operation starting time (power supply starting time) of sensors and time q2 to complete the processing of object driven by supplying voltage from voltage supply starting time q1.

"Measurement frequency at event occurrence" means information of measurement frequency when a predetermined event of a sensor occurs, such as frequency information of the wireless transmission and sensing data acquisition from sensors in this example. When an event occurs such that carbon dioxide concentration sensed with carbon dioxide concentration sensor 6C becomes greater than a predetermined level, temperature is sensed with infrared ray array sensor 6B at the event occurrence time and the measurement frequency is increased from the usual measurement frequency while the event is occurring, for example. The "Measurement frequency at event occurrence" can be expressed as multiples of the usual "Measurement frequency" as shown in Fig. 9. Namely, "5 times" indicates "Measured every 60sec" or "Measured 5 times in 300sec" on the basis of usual measurement frequency of "Measured every 300sec".

"Associated sensor type" means information of associated sensor type used to determine whether a predetermined event of a sensor occurs. In the above-described example, the associated sensor type of the infrared ray array sensor is the carbon dioxide gas concentration sensor.

In this example the sensor information of sensor information storing part 24S is input from the outside through information input terminal 25 to be stored. A sensor information provision device (such as personal computer not shown) firstly sends a request to write sensor information to control part 20 through information input terminal 25. The sensor information provision device waits for a write enable signal of sensor information from control part 20 and provides the sensor information to sensor information storing part 24S through information input terminal 25 after receiving the write enable signal. Control part 20 controls the sensor information received from information input terminal 25 to be stored in sensor information storing part 24S.

An operator selects a sensor type that is supposed to connect sensor connector part 21S for each sensor terminal 2. The sensor information of the selected sensor type is provided and stored to sensor terminal 2 from the sensor information provision device. The number of sensor types of the sensor information stored in sensor information storing part 24S is the number of sensor types to connect sensor connector part 21S. The number may be more or less than the number of connector jacks of sensor connector part 21S, or alternatively be the same as that of the connector jacks.

[Information stored in stand-alone power supply information storing part 24P]

Stand-alone power supply information storing part 24P stores stand-alone power supply information of two types of the above-described stand-alone power supplies 7A and 7B. The stand-alone power supply information stored in stand-alone power supply information storing part 24P includes necessary information of condition in which control part 20 of sensor terminal 2 performs the power supply control and power supply management.

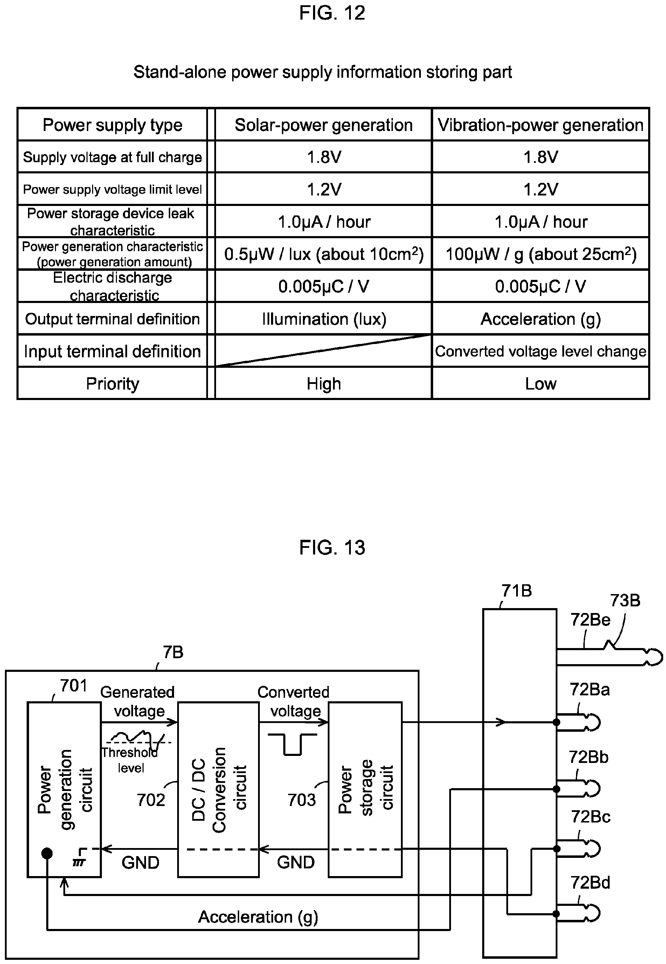

Fig. 12 shows an example of stand-alone power supply information stored in stand-alone power supply information storing part 24P in this embodiment. In this embodiment, information shown in the leftmost column of Fig. 12 is stored as stand-alone power supply information of two types of stand-alone power supplies 7A and 7B. It is not necessary that all of these information is stored for two types of stand-alone power supplies 7A and 7B. Some information may not be stored depending on stand-alone power supply types.

Each stand-alone power supply information shown in Fig. 12 will be explained with reference to examples of stand-alone power supply configuration shown in Fig. 13. Fig. 13 shows a configuration example having a basic function common among two types of stand-alone power supplies 7A and 7B. For convenience, Fig. 13 shows a configuration example of stand-alone power supply 7B. In the following explanation with reference to Fig. 13, each part of stand-alone power supply 7B will be mentioned so that the explanation is also applicable to the other stand-alone power supply 7A.

As shown in Fig. 13, stand-alone power supply 7B consists of power generation circuit 701, DC/DC conversion circuit 702 and power storage circuit 703.

Power generation circuit 701 uses vibration to generate electricity since stand-alone power supply 7B comprises a vibration-power-generation module. Besides, power generation circuit 701 generates electricity with stand-alone power supply 7A comprising a solar battery to use the sunlight or indoor light (such as light of fluorescent lamp).

Power generation circuit 701 generates electricity of which part higher than a predetermined threshold level is supplied through DC/DC conversion circuit 702 to be charged with power storage circuit 703, so that the charged voltage is supplied as a supply voltage to sensor terminal 2 through pin plug 72Ba of connector plug 71B.

As described above, pin plug 72Bd of connector plug 71B is connected to a ground terminal (GND) of stand-alone power supply 7B.

Power generation circuit 701 of stand-alone power supply 7B provides an output signal of acceleration (g) of vibration generating electricity and information of the resonance frequency (vibration frequency) of the resonance circuit of power generation circuit 701 to sensor terminal 2 through pin plug 72Bb of connector plug 71B. Besides, power generation circuit 701 with stand-alone power supply 7A comprising a solar battery provides light illumination information in generating electricity to sensor terminal 2 as an output signal through pin plug 72Bb of connector plug 71B.

As for stand-alone power supply 7B, sensor terminal 2 calculates the optimum parameter of the resonance circuit from information of stand-alone power supply 7B and provides it to power generation circuit 701 through pin plug 72Bc.

"Supply voltage at full charge" of stand-alone power supply information shown in Fig. 12 means a voltage level output from power storage circuit 703. "Power supply voltage limit level" means a voltage at which power storage circuit 703 has to perform a charge operation without outputting the supply voltage to sensor terminal 2. "Power storage device leak characteristic" means a value of leak current per unit hour of power storage circuit 703.

"Power generation characteristic" is expressed as a power generation amount ($\mu$W) per unit illumination (lux) for solar-battery type stand-alone power supply 7A or alternatively as a power generation amount per unit acceleration (g) for vibration-type stand-alone power supply 7B. "Electric discharge characteristic" means an electric discharge characteristic ($\mu$C/V; C: electric charge, V: operation voltage) of power storage circuit 703.

"Output terminal definition" means information showing what signal is output to sensor terminal 2 through an output (such as pin plug 72Bb). In other words, it means information of illumination (lux) for solar-battery type stand-alone power supply 7A or alternatively information of acceleration and vibration frequency for vibration-power-generation type stand-alone power supply 7B.

"Input terminal definition" means information showing what signal is input through an input terminal (such as pin plug 72Bc). As described above, the "Input terminal definition" is the optimum parameter of the resonance circuit for vibration-power-generation type stand-alone power supply 7B in Fig. 12. Besides, solar-battery type stand-alone power supply 7A has no control signal input and therefore the "Input terminal definition" is blank.

In this example the stand-alone power supply information stored in stand-alone power supply information storing part 24P is input from the outside through information input terminal 25 to be stored. A stand-alone power supply information provision device (such as personal computer not shown) firstly sends a request to write stand-alone power supply information to control part 20 through information input terminal 25. The stand-alone power supply information provision device waits for a write enable signal of stand-alone power supply information from control part 20 and provides the stand-alone power supply information to stand-alone power supply information storing part 24P through information input terminal 25 after receiving the write enable signal. Control part 20 controls the stand-alone power supply information received from information input terminal 25 to be stored in stand-alone power supply information storing part 24P.

An operator selects a stand-alone power supply type that is supposed to connect power supply connector part 21P for each sensor terminal 2. The stand-alone power supply information of the selected stand-alone power supply type is provided and stored to sensor terminal 2 from the stand-alone power supply information provision device. The number of stand-alone power supply types of the stand-alone power supply information stored in stand-alone power supply information storing part 24P is the number of stand-alone power supply types to connect power supply connector part 21P. The number may be more or less than the number of connector jacks of power supply connector part 21P, or alternatively be the same as that of the connector jacks.

[Power supply circuit 26]

Power supply voltage output terminals of two voltage/current conversion circuits 222P1 and 222P2 of power supply interface 22P are connected to power supply circuit 26 while signal output terminals and signal input terminals of two voltage/electric current conversion circuits 222P1 and 222P2 are connected to control part 20.

Power supply circuit 26 has a dual circuit section to generate power supply voltage Vcc of sensor terminal 2 to be supplied to each part of sensor terminal 2, for each power supply voltage from two voltage/current conversion circuits 222P1 and 222P2 of power supply interface 22P. Power supply circuit 26 comprises a selection circuit (not shown) to select which power supply voltage generated by parts of the dual circuit section should be employed as a power supply voltage (main power supply voltage) of sensor terminal 2. When sensor terminal 2 isn't turned ON with power supply connector part 21P having no connection to stand-alone power supplies 7A and 7B, the selection circuit can select power supply voltages generated by any part of the dual circuit section. Sensor terminal 2 can immediately operate with power supply voltage supplied from a stand-alone power supply when sensor terminal 2 connects the stand-alone power supply generating a charged voltage higher than a predetermined voltage level.

The main power supply means a stand-alone power supply having a stable supply voltage higher than the "Supply voltage limit level" in view of "Generated voltage level and illumination" and "Generated voltage level and acceleration". When two types of stand-alone power supplies are connected to power supply connector part 21P while satisfying the condition to be a main power supply, the main power supply is selected between the two types of stand-alone power supplies according to a predetermined priority. An auxiliary power supply to be described later is a stand-alone power supply that doesn't satisfy the condition to be a main power supply or that has the lower priority predetermined.

Control part 20 has power supply management function part 201 to control power supply circuit 26 to perform a power supply control and power supply voltage management. Power supply management function part 201 provides selection control signals for the selection circuit of power supply circuit 26.

Switch circuits 221P1 and 221P2 of power supply interface 221P are turned ON in the initial state where stand-alone power supplies are not connected to corresponding connector jacks 21P1 and 21P2 of power supply connector part 21P. When stand-alone power supply 7A or 7B is connected to power supply connector part 21P, power supply circuit 26 generates power supply voltage Vcc to be supplied to each part according to the voltage supplied from voltage/current conversion circuit 222P1 or 222P2 of stand-alone power supply 7A or 7B which is connected to power supply connector part 21P. Thus sensor terminal 2 becomes operable.

In such operable sensor terminal 2, power supply type discrimination part 23P detects the connection between stand-alone power supply 7A or 7B and connector jack 21P1 or 21P2 of power supply connector part 21P and discriminates the connected stand-alone power supply 7A or 7B to provide the discrimination result to power supply management function part 201 of control part 20.

Power supply management function part 201 of control part 20 starts the power supply management processing for stand-alone power supply connected to power supply connector part 21P according to the discrimination result provided from power supply type discrimination part 23P.

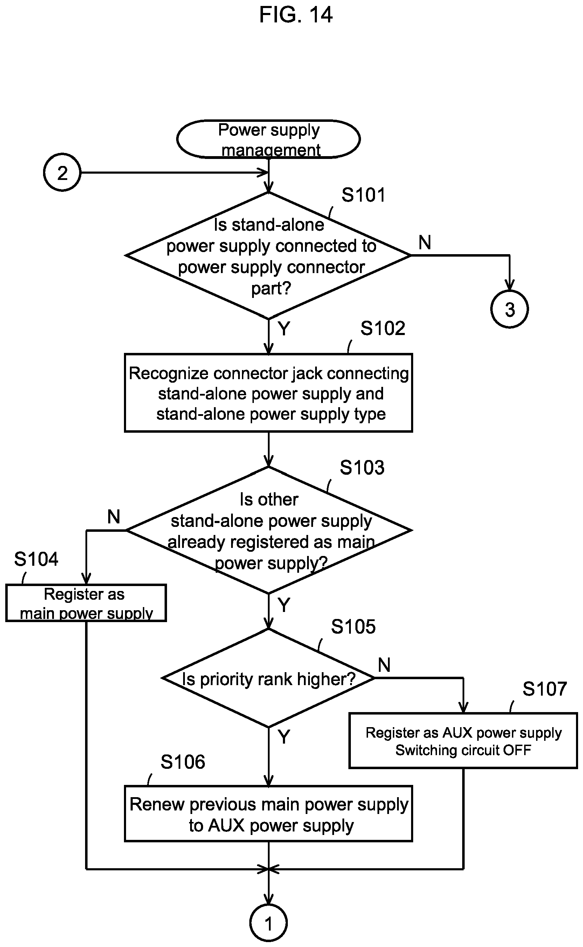

The power supply management processing of power supply management function part 201 will be explained with reference to flowcharts shown in Fig. 14, Fig. 15 and Fig. 16.

Power supply management function part 201 of control part 20 monitors a discrimination result of power supply type discrimination part 23P and finds a connection between stand-alone power supply 7A or 7B and power supply connector part 21P (Step S101). When a connection is found between stand-alone power supply 7A or 7B and power supply connector part 21 in Step S101, power supply management function part 201 recognizes the connected stand-alone power supply type and connector jack 21P1 or 21P2 of power supply connector part 21P connected to the stand-alone power supply (Step S102).

Power supply management function part 201 checks if the other stand-alone power supply is registered as a main power supply connected to power supply connector part 21P (Step S103). When the other stand-alone power supply is not found to be registered as a main power supply in Step S103, power supply management function part 201 registers the type of presently connected stand-alone power supply as a main power supply in association with the connector jack connected in a memory (Step S104).

When the other stand-alone power supply is found to be registered as a main power supply in Step S103, power supply management function part 201 checks the priority of stand-alone power supply presently connected (Step S105). When the stand-alone power supply presently connected is found to have a priority in Step S105, power supply management function part 201 registers the previously-registered main stand-alone power supply type as an auxiliary power supply and registers the presently-connected stand-alone power supply type as a main power supply in association with the connector jack connected (Step S106).

When the stand-alone power supply presently connected is found not to have a priority in Step S105, power supply management function part 201 registers the presently-connected stand-alone power supply type as an auxiliary power supply in association with the connector jack connected (Step S107).

After Step 104, Step 106 or Step 107, power supply management function part 201 calculates a possibility to maintain the stand-alone power supply as a main power supply according to the stand-alone power supply information of the main stand-alone power supply stored in stand-alone power supply information storing part 24P and information of the stand-alone power supply, so that the calculation result decides whether the registered main stand-alone power supply should be maintained (Step S 112). When it is decided that the registered main stand-alone power supply should be maintained in Step S112, Power supply management function part 201 returns the processing to Step S111 to repeat processing of Step S111 and Step S112.

When it is decided that the registered main stand-alone power supply should not be maintained in Step S 112, power supply management function part 201 looks for another stand-alone power supply registered as an auxiliary power supply (Step S113).

When the other stand-alone power supply is found to be registered as an auxiliary power supply in Step S113, power supply management function part 201 turns ON the switch circuit of the power supply interface connecting the registered auxiliary stand-alone power supply (Step S114). Then power supply management function part 201 changes the registration of the main stand-alone power supply to an auxiliary power supply, and changes the registration of the auxiliary stand-alone power supply to a main power supply (Step S 115). Then the switch circuit of the power supply interface connecting the newly-registered auxiliary stand-alone power supply is turned OFF (Step S116). Then power supply management function part 201 returns the processing to Step S111 from Step S116 and repeats the processing after Step S111.

When the other stand-alone power supply is not found to be registered as an auxiliary power supply in Step S113, power supply management function part 201 changes the registration of the main stand-alone power supply to an auxiliary power supply (Step S117), and turns OFF the switch circuit of the power supply interface connecting the newly-registered auxiliary stand-alone power supply (Step S118). Power supply management function part 201 returns the processing to Step S101 and repeats the processing after Step S101.

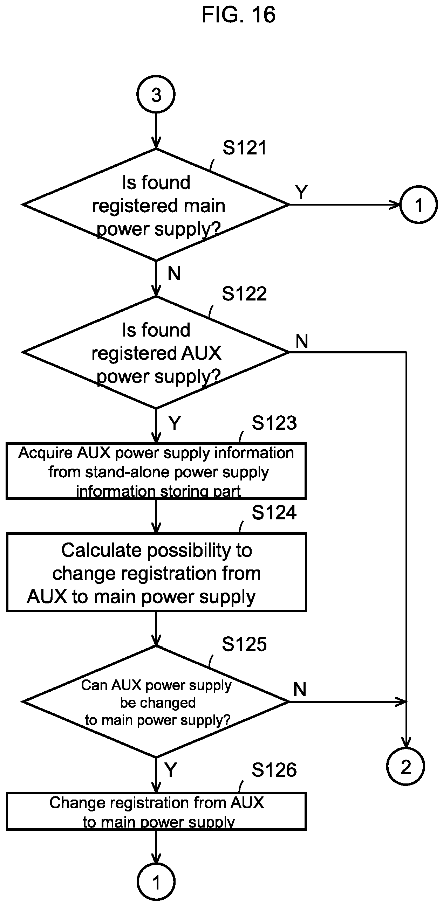

Next, when stand-alone power supply 7A or 7B is not connected to power supply connector part 21P in Step S101, power supply management function part 201 checks if there is a registered main power supply (Step S121 in Fig. 16). When a registered main power supply is found in Step S121, power supply management function part 201 progresses the processing to Step S111 and repeats the processing after Step S111.

When a registered main power supply is not found in Step S121, it checks if there is a registered auxiliary power supply (Step S122). When a registered auxiliary power supply is not found in Step S122, power supply management function part 201 returns processing to Step S101 and repeats processing after this Step S101.

When a registered auxiliary power supply is found in Step S122, power supply management function part 201 reads out stand-alone power supply information of the registered auxiliary stand-alone power supply stored in stand-alone power supply information storing part 24P (Step S123), and calculates a possibility to change the registered stand-alone power supply to a main power supply (Step S124).

When it isn't found that the registered auxiliary stand-alone power supply can be changed to a main power supply according to the calculation result in Step S124, power supply management function part 201 returns the processing to Step S101 and repeats the processing after Step S101.

When it is found that the registered auxiliary stand-alone power supply can be changed to a main power supply according to the calculation result in Step S124, power supply management function part 201 changes the registration of the auxiliary power supply to a main power supply (Step S126), and lets the processing jump to Step S111 and repeats the processing after Step S111.

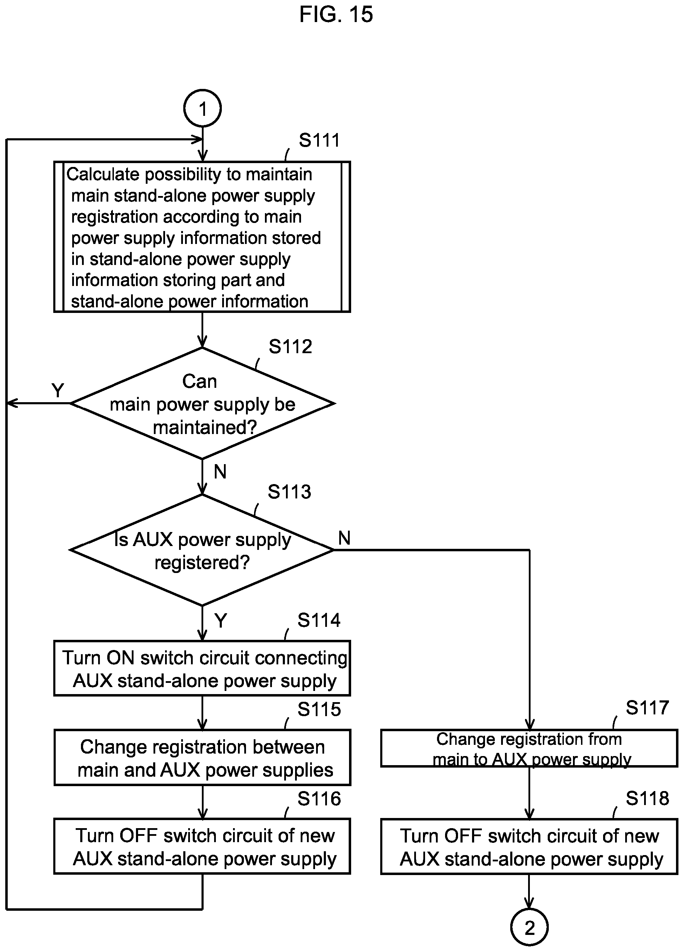

Step S111 shown in Fig. 15 should have a processing procedure of calculation which depends on types of the stand-alone power supply connected to power supply connector part 21P. Such a processing procedure is determined as a power-supply check schedule depending on the type of each stand-alone power supply when the stand-alone power supply is connected. In this embodiment, the processing procedure is stored in schedule information storing part 27 in association with the connector jack connecting the stand-alone power supply and the type of the stand-alone power supply.

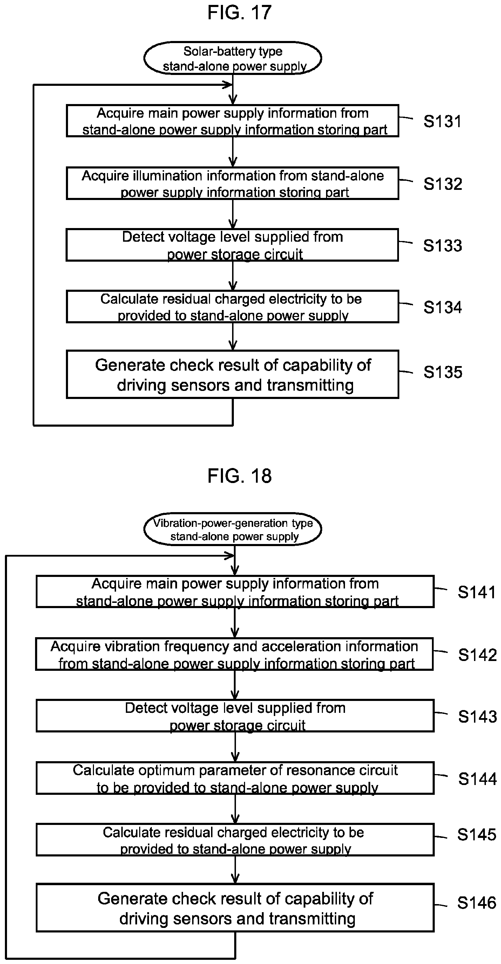

Schedule information storing part 27 stores the process procedure as shown in Fig. 17 for a solar-battery type main stand-alone power supply 7A, as well as Fig. 18 for a vibration-power-generation type main stand-alone power supply 7B.

The schedule information for the solar-battery type main stand-alone power supply 7A will be explained with reference to the flowchart showing process procedure in Fig. 17.

Power supply management function part 201 reads out stand-alone power supply information of main stand-alone power supply 7A from stand-alone power supply information storing part 24P by using the stand-alone power supply type information (information generated according to the discrimination information of power supply type discrimination part 23P) (Step S131). As shown in Fig. 12, information such as "Supply voltage at full charge", "Supply voltage limit level", "Power storage device leak characteristic", "Power generation characteristic" and "Electric discharge characteristic" is read out in case of solar-battery type stand-alone power supply 7A. Once such stand-alone power supply information read out from stand-alone power supply information memory part 24P is stored in a buffer memory, the information stored in the buffer memory can be used afterwards. Therefore the readout process from stand-alone power supply information storing part 24P in Step S131 can be omitted since the second processing of Step S111.

Then, power supply management function part 201 reads out illumination information of signal output from stand-alone power supply 7A (Step S132). Power supply management function part 201 detects a voltage level supplied from stand-alone power supply 7A (Step S133).

Power supply management function part 201 calculates a residual electricity charged in power storage circuit 703 for stand-alone power supply 7A from the stand-alone power supply information read out in Step S131 and information acquired from stand-alone power supply 7A in Step S132 and Step S133 (Step S134).

Power supply management function part 201 checks if stand-alone power supply 7A having thus calculated residual electricity can drive a sensor connected to sensor connector part 21S and an internal circuit of sensor terminal 2 and perform a wireless transmission, so that the check result is generated (Step S 135). In Step S 112, the above-described possibility is calculated according to such a check result. The processing of Step S111 ends here.

The schedule information for the vibration-power-generation type main stand-alone power supply 7B will be explained with reference to the flowchart showing process procedure in Fig. 18.

Like Step S131, power supply management function part 201 reads out stand-alone power supply information of main stand-alone power supply 7B from stand-alone power supply information storing part 24P by using the stand-alone power supply type information (Step S141).

Then, power supply management function part 201 reads out information of vibration frequency and acceleration of signal output from stand-alone power supply 7B (Step S142). Power supply management function part 201 detects a voltage level supplied from stand-alone power supply 7B (Step S143).

According to the information of vibration frequency and acceleration acquired in Step S 142 as well as the voltage level supplied from stand-alone power supply 7B detected in Step S143, power supply management function part 201 calculates the optimum parameter of the resonance circuit of power generation circuit 701 of stand-alone power supply 7B and provides it to stand-alone power supply 7B (Step S144).

Power supply management function part 201 calculates a residual electricity charged in power storage circuit 703 for stand-alone power supply 7B from the stand-alone power supply information read out in Step S141, information acquired from stand-alone power supply 7B in Step S 142 and Step S 143 and the optimum parameter calculated in Step S144 (Step S145).

Power supply management function part 201 checks if stand-alone power supply 7B having thus calculated residual electricity can drive a sensor connected to sensor connector part 21S and an internal circuit of sensor terminal 2 and perform a wireless transmission, so that the check result is generated (Step S146). In Step S 112, the above-described possibility is calculated according to such a check result. The processing of Step S111 ends here.

Accordingly, once any one of different power-generation types of stand-alone power supplies is connected to sensor terminal 2 while satisfying a charging requirement to be a main power supply, sensor terminal 2 is automatically turned ON to operate without setting according to the connected stand-alone power supply type. Further, the connected stand-alone power supply can be subject to an automatic management to check if each type of power supply can be maintained as a main power supply. Namely, sensor terminal 2 can achieve so-called plug and play in terms of power supply management of different types of stand-alone power supplies.

With the above-described embodiment, sensor terminal 2 makes it possible that different power-generation types of stand-alone power supplies are connected to sensor terminal 2 at the same time under a power supply management control in which any one of the connected power supplies is registered as a main power supply while the other is registered as an auxiliary power supply so that the main power supply and auxiliary power supply are used and arbitrarily switched by monitoring the charged voltages.

Therefore, electric power is supplied to sensor terminal 2 from a main solar-battery type stand-alone power supply in the daytime while the other power-generation type stand-alone power supply charged in the daytime is used as a main power supply in the nighttime, so that a suitable power supply is automatically selected according to environmental change without special setting of stand-alone power supply. Further, when the stand-alone power supply is only connected to power supply connector part 21P, a power supply management can be realized by so-called plug and play power supply without manual setting of the main power supply and auxiliary power supply.

The number of stand-alone power supplies connected at the same time may be three or more, although there are only two power supplies of main power supply and auxiliary power supply connected simultaneously in the above-described embodiment. One of the three or more stand-alone power supplies connected to the sensor terminal should be registered as a main power supply while the others should be registered as auxiliary power supplies. When three or more stand-alone power supplies are connected to the sensor terminal, it is not necessary that all of the stand-alone power supplies have different types from each other. It is possible that a plurality of the same type of stand-alone power supplies is connected to the sensor terminal.

In the above-described example, power supply management function part 201 turns OFF supplying the power from a stand-alone power supply when the stand-alone power supply cannot be maintained as a main power supply. However, it is possible that a measurement interval described later is extended from a predetermined interval to reduce discharge of the stand-alone power supply to extend the charging time, when a voltage level generated by the main stand-alone power supply decreases but satisfies the requirement for the main power supply.

[Schedule information storing part 27, schedule generation function part 202 and schedule execution function part 203]

Control part 20 controls to acquire sensing data of each sensor 6A - 6D in each appropriate timing depending on types of sensors 6A - 6D and intermittently transmit the acquired sensing data with a predetermined cycle depending on types of sensors 6A - 6D. In this embodiment, control part 20 controls each sensor 6A - 6D to start, stop and acquire sensing data in timings according to types of sensors 6A - 6D, and controls wireless transmission of sensing data to start and stop intermittently with a cycle depending on types of sensors 6A - 6D as well as temporary storing of sensing data.

As described above, intermittent wireless transmission of sensing data is performed just after the sensing data is acquired from sensors intermittently. However, the intermittent acquisition timing of sensing data may not be synchronized with the wireless transmission timing of sensing data. Both timings may not be synchronized while their repeating cycles may be set separately.

In this embodiment, control part 20 acquires sensing data from each sensor in a timing depending on the sensor type to be monitored and checks if each sensor type becomes a predetermined event occurrence condition. For example, control part 20 decreases the cycle of intermittent wireless transmission after finding the event occurrence condition that "Temperature suddenly changes" with sensing data of infrared ray array sensor 6B.

Further, when a sensor has sensing data satisfying its event occurrence condition, control part 20 controls to wirelessly transmit the sensing data of the sensor immediately and change the cycle of intermittent wireless transmission while even sensing data of another associated sensor is processed likewise. For example, when sensing data of carbon dioxide concentration sensor 6C satisfies its event occurrence condition that "Carbon dioxide gas concentration exceeds a predetermined level", the sensing data of not only carbon dioxide gas concentration sensor 6C, but also infrared ray array sensor 6B and VOC sensor 6D, are immediately transmitted and the cycles of intermittent wireless transmission are decreased by control part 20.

Control part 20 generates and registers schedule information of a sequence to acquire sensing data of each type of sensor 6A - 6D and control wireless transmission, so that the acquisition of sensing data of every type of sensor 6A - 6D and wireless transmission are executed according to thus registered schedule information.

Accordingly, sensor terminal 2 includes schedule information storing part 27 while control part 20 includes schedule generation function part 202 and schedule execution function part 203. Schedule generation function part 202 and schedule execution function part 203 are configured with software programs executed by a microcontroller of control part 20 like power supply management function part 201.

[Schedule information storing part 27]

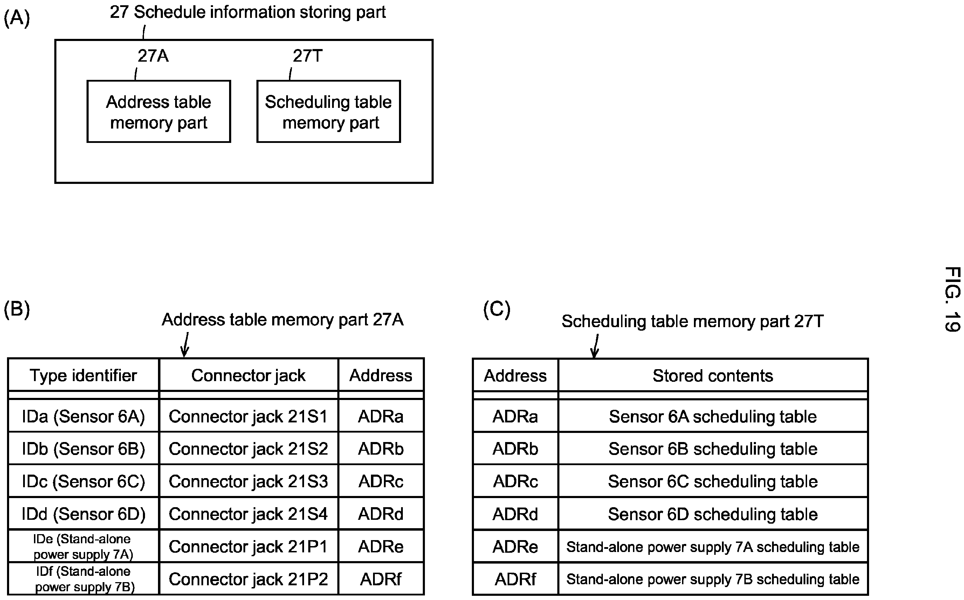

Fig. 19 is an explanatory diagram of contents stored in schedule information storing part 27. In this example, schedule information storing part 27 comprises address table memory part 27A and scheduling table memory part 27T as shown in Fig.19 (A). As described above, even schedule information of stand-alone power supplies 7A and 7B is stored in schedule information storing part 27.

In address table memory part 27A, connected connector jack and address (storing area) of scheduling table is defined according to identifiers of sensor 6A - 6D and stand-alone power supplies 7A and 7B.

Fig. 19 (B) shows an example of contents stored in address table memory part 27A. Fig. 19 (B) shows that address table memory part 27A stores type identifiers of sensor connected to sensor connector part 21S or power supply connector part 21P, type identifiers of stand-alone power supply, connector jacks connecting the sensor and stand-alone power supply and addresses of scheduling table memory part 27T storing the connected sensor scheduling table and of stand-alone power supply schedule information corresponding to each other.

Fig. 19 (C) shows that scheduling table memory part 27T stores sensor scheduling tables and stand-alone power supply schedule information corresponding to addresses prescribed in address table memory part 27A.

Connector jacks are indicated with reference codes corresponding to connector jacks shown in Fig. 3 in Fig. 19 (B) for explanatory convenience. However, the address table actually stores identifiers of connector jacks 21S1 - 21S4 and connector jacks 21P1 and 21P22.

Figs. 19 (B) and (C) shows an example of contents stored in address table memory part 27A and an example of contents stored in scheduling table memory part 27T, wherein four types of sensors 6A - 6D are connected to all of connector jacks 21S 1 - 21S4 of sensor connector part 21S as shown in Fig. 3 while two types of stand-alone power supplies 7A and 7B are connected to power supply connector part 21P as shown in Fig. 3.

In Fig. 19, sensor type identifier IDa identifies current sensor 6A, identifier IDb identifies infrared ray array sensor 6B, identifier IDc identifies carbon dioxide gas concentration sensor 6C and identifier IDd identifies VOC sensor 6D. In this example, addresses (memory area) ADRa - ADRd storing the scheduling tables corresponding to sensors 6A - 6D of sensor type identifiers IDa - IDd are allocated so that schedule information generated for each of sensors 6A - 6D is stored in each of addresses ADRa - ADRd.

As shown in Figs. 19 (B) and (C), address table memory part 27A prescribes addresses ADRe and ADRf corresponding to identifier IDe (solar-battery type stand-alone power supply) and identifier IDf (vibration-power-generation type stand-alone power supply) of stand-alone power supplies 7A and 7B so that the schedule information of stand-alone power supplies 7A and 7B is stored in each of addresses ADRe and ADRf.

As described above, it is not necessary that all of four types of sensors 6A, 6B, 6C and 6D are connected to all of connector jacks 21S1 - 21S4 of sensor connector part 21S. As well, it is not necessary that both types of stand-alone power supplies 7A and 7B are connected to both of connector jacks 21P1 and 21P2 of power supply connector part 21P. Accordingly, address table memory part 27A and scheduling table memory part 27T store address tables and scheduling tables of connected stand-alone power supplies and sensors only. When only one type of sensors 6A - 6D is connected to one of connector jacks 21S1 - 21S4 of sensor connector part 21S while only one type of stand-alone power supplies 7A and 7B is connected to power supply connector part 21P, schedule information storing part 27 stores the address table and scheduling table for the sensor and stand-alone power supply only.

[Generation and storage of sensor schedule information]

As described above, schedule generation function part 202 of control part 20 has a function to generate schedule information for stand-alone power supply 7A or 7B connected to power supply connector part 21P to be stored in schedule information storing part 27 as shown in Fig. 19. Schedule generation function part 202 of control part 20 generates schedule information for the connected sensors to be stored in schedule information storing part 27 at each time of connecting any of sensor 6A - 6D to sensor connector part 21S.

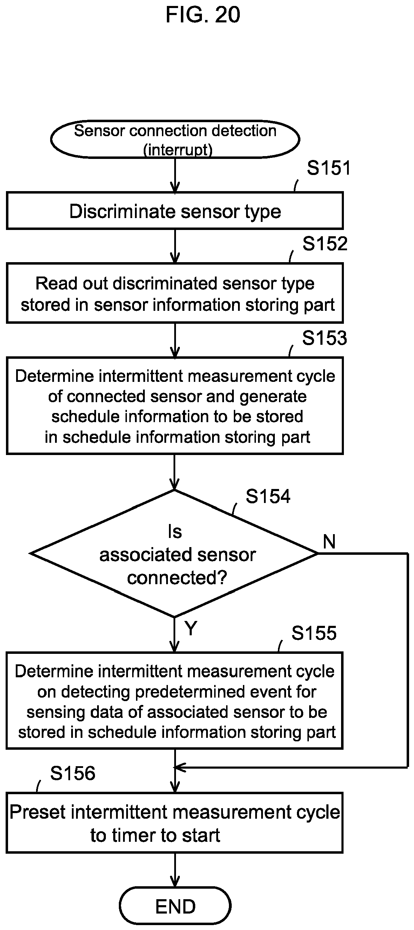

Fig. 20 shows an example of flowchart to operate schedule generation function part 202 when one of four types of sensors 6A - 6D is connected to any of four connector jacks 21S 1 - 21S4 of sensor connector part 21S.

When any of sensors 6A - 6D is connected to sensor terminal 2 operating with a main stand-alone power supply, sensor type discrimination part 23S provides a discrimination result including information of the sensor type of the connected sensor and the connector jack connecting the sensor among four connector jacks 21S 1 - 21S4 to control part 20.

Schedule generation function part 202 of sensor terminal 2 receives the discrimination result as interrupt input from sensor type discrimination part 23S and starts processing according to the flowchart shown in Fig. 20. At first schedule generation function part 202 acquires the connector jack connecting the sensor and the connected sensor type from the discrimination result of sensor type discrimination part 23S (Step S151).

Then, schedule generation function part 202 reads out sensor information of thus acquired sensor type from sensor information storing part 24S (Step S 152). According to the sensor information thus read out, it generates intermittent measurement cycle (intermittent cycle of sensing data acquisition timing and the wireless transmission) of sensor connected to sensor connector part 21S and schedule information consisting of sensing data acquisition processing sequence from the sensor and sensing data wireless transmission processing sequence, so that the determined intermittent measurement cycle and the generated schedule information are stored in association with the sensor type and connector jack connected in schedule information storing part 27 (Step S153).

As to the above-described event occurrence, schedule generation function part 202 checks if a sensor associated with the sensor connected to sensor connector part 21S is connected to another connector jack of sensor connector part 21S (Step S154).

When the associated sensor is found to be connected to another connector jack of sensor connector part in Step S154, schedule generation function part 202 determines an intermittent measurement cycle of the sensor at the time of detecting a predetermined event for the associated sensor and stores thus determined intermittent measurement cycle as a part of schedule information (Step S 155).

Step S155 progresses to Step S156 to start a timer which corresponds to the sensor connected to sensor connector part 21S and has a preset time of the intermittent measurement cycle set for the sensor in Step S153 (Step S156). Schedule execution function part 203 to be described later uses such a timer comprising a software counter to control a starting timing of intermittent sensing data acquisition and wireless transmission for the sensor.

When the associated sensor is found not to connect another connector jack of sensor connector part 21S in Step S 154, schedule generation function part 202 let the processing jump to Step S156, to start a timer which corresponds to the sensor connected to sensor connector part 21S and has a preset time of the intermittent measurement cycle set for the sensor in Step S153. This schedule generation processing routine ends here.

[Example of schedule information corresponding to sensor type]

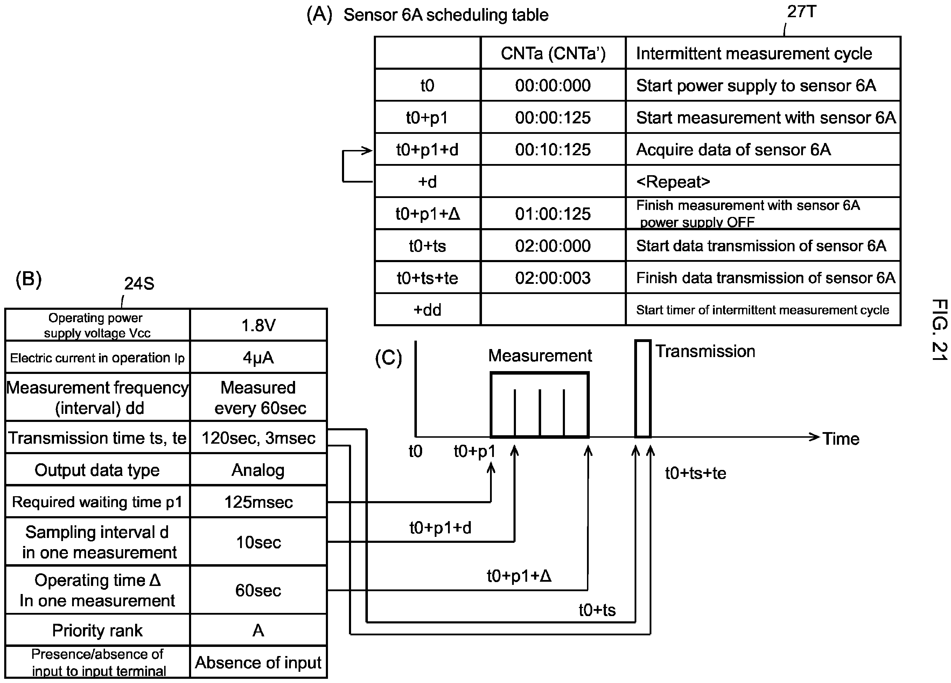

Examples of generated schedule information corresponding to each sensor type explained with the flowchart shown in Fig. 20 will be explained with reference to Fig. 21 - Fig. 23. In Fig. 21 - Fig. 23, timer count levels "CNTa : CNTc : CNTd" are indicated by units "sec : min : msec".

Figs. 21 (A) - (C) are explanatory diagrams of schedule information example of sensor 6A, where Fig. 21 (A) shows an example of schedule information of scheduling table generated for sensor 6A. Fig. 21 (B) shows sensor information extracted from the sensor information shown in Fig. 9, from which schedule generation function part 202 generates schedule information shown in Fig. 21 (A). Fig. 21 (C) is a timing chart to explain timings of sensing data acquisition sequence and wireless transmission sequence according to the schedule information generated as shown in Fig. 21 (A).

With reference to Fig. 21, examples of schedule information generated at the time of connecting sensor 6A to sensor connector part 21S will be explained.

As shown in Fig. 21 (A), schedule generation function part 202 stores intermittent measurement cycle time which is calculated according to "Measurement frequency (interval) dd" of sensor information shown in Fig. 21 (B) and converted into count level CNTa of timer corresponding to sensor 6A, at the top of address ADRa for storing schedule information of sensor 6A. Count level CNTa is preset to the timer provided corresponding to sensor 6A to start counting, so that the intermittent measurement is started and the measurement starting time (such as starting time of sensing data acquisition and its wireless transmission) is determined by counting up to count CNTa.

When a predetermined event of sensor 6A is occurring, the top of address ADRa for schedule information of sensor 6A is renewed by count level CNTa' of the timer according to the measurement frequency (interval) of sensor 6A at the time of event occurrence. When the occurred event finishes, the top of address ADRa for schedule information of sensor 6A is renewed by original count level CNTa. The above-described explanation is applicable to other types of sensors 6B - 6D.

Schedule generation function part 202 generates processing sequence information to perform sensing data acquisition from sensor 6A and wireless transmission according to sensor information of sensor 6A stored in sensor information storing part 24S as shown in Figs. 21 (A) - (C) while sensor operation starting time t0 is an intermittent timing per intermittent measurement set corresponding to each sensor.

Namely, schedule generation function part 202 prescribes "Starting supplying electric power to sensor 6A" at sensor operation starting time t0 as shown in Fig. 21 (A). As shown in Fig. 21 (C), schedule generation function part 202 refers to "Required waiting time p1" of sensor information (see Fig. 21 (B)) of sensor 6A and prescribes "Start measurement of sensing data with sensor 6A" at t0+p1 when "Required waiting time p1" has passed from sensor operation starting time t0.

Schedule generation function part 202 refers to "Sampling interval d in one measurement" of sensor information of sensor 6A and prescribes "Acquire (sample) sensing data of sensor 6A" at t0+p1+d when "Sampling interval d in one measurement" has passed from measurement starting time t0+p1.

Schedule generation function part 202 prescribes "Repeat the acquiring (sampling) sensing data of sensor 6A" at "Sampling interval d in one measurement" of sensor information of sensor 6A. As shown in Fig. 21 (C), schedule generation function part 202 refers to "Operation time $\Delta$ in one measurement" of sensor information of sensor 6A and prescribes "Finish measurement of sensing data with sensor 6A and stop power supply (power supply OFF) to sensor 6A" at t0+p1+$\Delta$.

Sensor terminal 2 acquiring sensing data of sensor 6A is completed with the above-described processing sequence up to here.

As shown in Fig. 21 (C), schedule generation function part 202 refers to "Transmission time ts, te" of sensor information of sensor 6A and prescribes "Start transmission of acquired sensing data of sensor 6A" at t0+ts. As shown in Fig. 21 (C), schedule generation function part 202 prescribes "Finish transmission of sensing data of sensor 6A" at t0+ts+te afterwards.

Schedule generation function part 202 prescribes "Preset count level CNTa stored at the top of address ADRa for schedule information of sensor 6A to a timer provided corresponding to sensor 6A, and start timer for the time measurement". The processing sequence to perform a measurement (sensing data acquisition and wireless transmission in this example) with sensor 6A is completed here. Scheduling table memory part 27T stores schedule information including processing sequence information of sensor 6A generated by schedule generation function part 202.

As described above, when sensor 6A is connected to sensor connector part 21S, schedule generation function part 202 generates an address table of connected sensor 6A and generates schedule information of sensor 6A consisting of intermittent measurement cycle of sensor 6A and processing sequence information to acquire sensing data of sensor 6A and wireless transmission to be stored in schedule information storing part 27.

Similarly to sensor 6A, when sensor 6B is connected to sensor connector part 21S, schedule information is generated according to sensor information of sensor 6B stored in sensor information storing part 24S. Accordingly, detailed explanations of schedule information example of sensor 6B are omitted.

"Presence/absence of input to input terminal" stored in sensor information storing part 24S corresponding to the sensor information of sensors 6A and 6B is blank or "Absence of input" whereas "Presence/absence of input to input terminal" in the sensor information of sensors 6C and 6D is "Presence of input". Therefore, it is necessary that the signal input through the input terminal is considered in generating schedule information for sensors 6C and 6D.

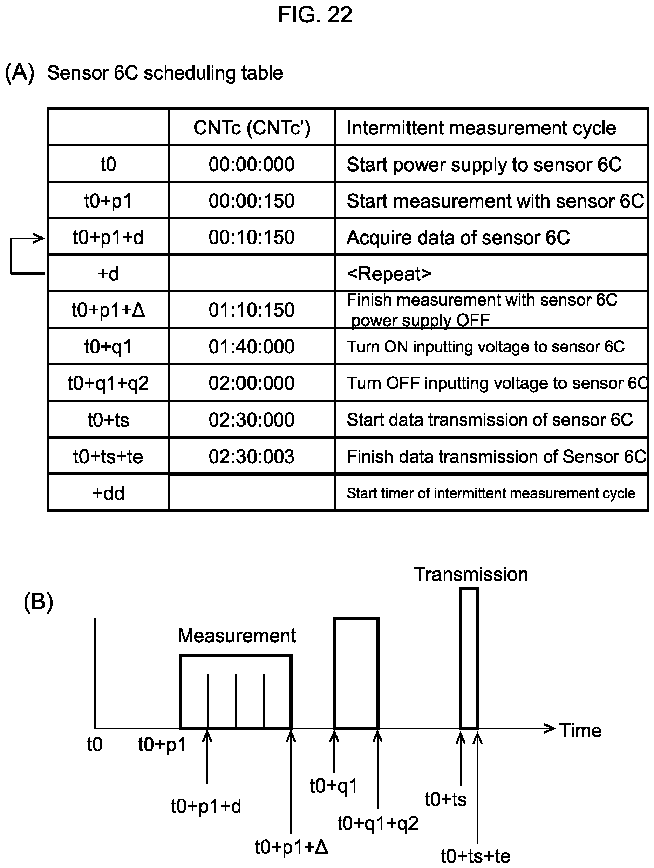

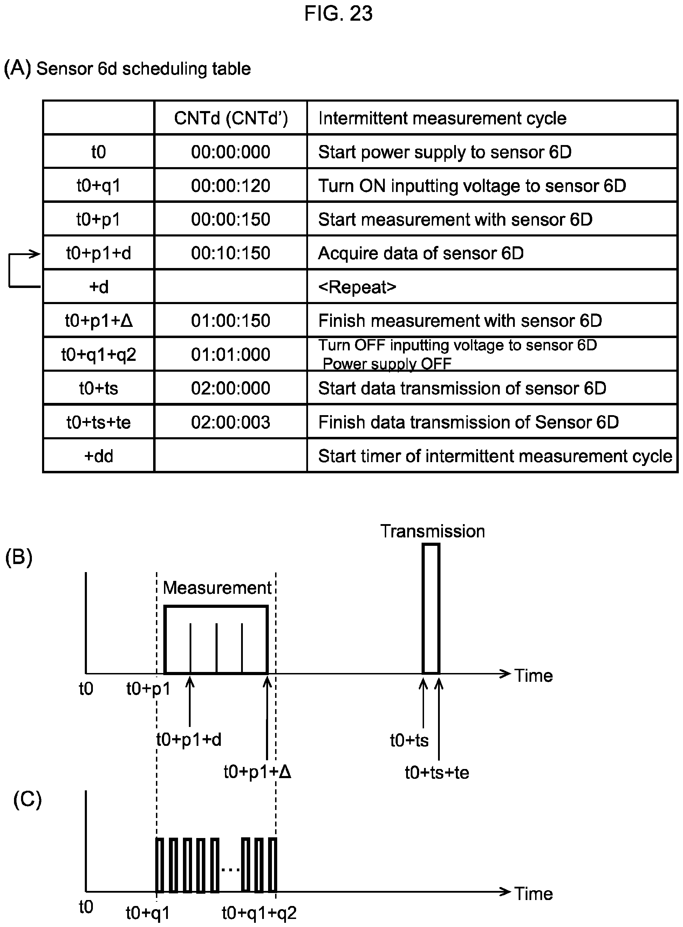

Fig. 22 shows schedule information for sensor 6C while Fig. 23 shows schedule information for sensor 6D. These schedule information will be explained.

Fig. 22 (A) shows an example of schedule information of scheduling table generated for sensor 6C. Fig. 22 (B) is a timing chart to explain timings of sensing data acquisition sequence of sensor 6C and wireless transmission sequence according to the schedule information generated for sensor 6C.

Sensor 6C is a carbon dioxide gas concentration sensor in this example. The carbon dioxide gas concentration sensor takes in atmosphere with sensing part 601 to sense carbon dioxide gas concentration. Accordingly, sensing part 601 of the carbon dioxide gas concentration sensor is provided with a deaeration part (not shown) to deaerate atmosphere for the next measurement after present sensing of carbon dioxide gas concentration. The deaeration part is driven by supplying a predetermined input voltage as an input signal from sensor terminal 2. As shown in Fig. 9, sensor information of sensor 6C includes input voltage level information and time information q1 and q2 to prescribe timings to accept the input voltage. As described above, time q1 is time starting from the intermittent operation starting time while time q2 is time to complete the deaeration processing starting from time q1.

As shown in Figs. 22 (A) and (B), schedule generation function part 202 stores intermittent measurement cycle time which is calculated according to "Measurement frequency (interval) dd" of sensor information of sensor 6C and converted into count level CNTc of timer corresponding to sensor 6C, at the top of address ADRc for storing schedule information of sensor 6C.

The sensing data acquisition sequence information of sensor 6C from power supply starting time t0 to t0+p1+Δ is generated in the same way as the sensing data acquisition sequence information of sensor 6A (cf. Fig. 21 (B) and Fig. 22 (B)). Nevertheless, such schedule information includes various time values of sensor information different between sensors 6A and 6C, as shown in Fig. 9.

As shown in Figs. 22 (A) and (B) for sensor 6C, schedule generation function part 202 prescribes "Turn ON inputting voltage to sensor 6C" to supply predetermined input voltage to the deaeration part of sensor 6C from sensor terminal 2 at t0+q1 after acquiring sensing data. Schedule generation function part 202 prescribes "Turn OFF inputting voltage to sensor 6C" to stop providing input voltage from sensor terminal 2 to sensor 6C at t0+q1+q2.

Then, schedule generation function part 202 refers to "Transmission time ts, te" of sensor information of sensor 6C and prescribes "Start transmission of acquired sensing data of sensor 6C" at t0+ts. Schedule generation function part 202 prescribes "Finish transmission of sensing data of sensor 6C" at t0+ts+te afterwards.

Schedule generation function part 202 prescribes "Preset count level CNTc stored at the top of address ADRc for schedule information of sensor 6C to a timer provided corresponding to sensor 6C, and start timer for the time measurement". The processing sequence to perform a measurement (sensing data acquisition and wireless transmission in this example) with sensor 6C is completed here. Scheduling table memory part 27T stores schedule information including processing sequence information of sensor 6C generated by schedule generation function part 202.

Sensor 6D is a VOC sensor in this example. Sensing part 601 of the VOC sensor acquires sensing data according to a frequency signal provided from sensor terminal 2. Accordingly, sensing part 601 of the VOC sensor has to receive a predetermined frequency signal as an input signal from sensor terminal 2 for a measurement. As shown in Fig. 9, sensor information of sensor 6D includes input voltage level information of the frequency signal and time information q1 and q2 to prescribe timings to accept the input voltage of the frequency signal. As described above, time q1 is time starting from the intermittent operation starting time while time q2 is time to complete the deaeration processing starting from time q1.

As shown in Figs. 23 (A) and (B), schedule generation function part 202 stores intermittent measurement cycle time which is calculated according to "Measurement frequency (interval) dd" of sensor information of sensor 6D and converted into count level CNTd of timer corresponding to sensor 6D, at the top of address ADRd for storing schedule information of sensor 6D.

Schedule generation function part 202 generates processing sequence information to perform sensing data acquisition from sensor 6D and wireless transmission according to sensor information of sensor 6D stored in sensor information storing part 24S as shown in Figs. 23 (A) - (C) while sensor operation starting time t0 is an intermittent timing per intermittent measurement set corresponding to each sensor.

Namely, schedule generation function part 202 prescribes "Start power supply to sensor 6D" at sensor operation starting time t0 as shown in Fig. 23 (A). As shown in Fig. 23 (C), schedule generation function part 202 refers to "Voltage input time q1 to sensor 6D" of sensor information (see Fig. 9) of sensor 6D and prescribes "Start providing input voltage (frequency signal) to sensor 6D" at t0+q1.

As shown in Fig. 23 (B), schedule generation function part 202 refers to "Required waiting time p1" of sensor information of sensor 6D and prescribes "Start measurement of sensing data with sensor 6D" at t0+p1 when "Required waiting time p1" has passed from sensor operation starting time t0.

Schedule generation function part 202 refers to "Sampling interval d in one measurement" of sensor information of sensor 6D and prescribes "Acquire (sampling) sensing data of sensor 6D" at t0+p1+d when "Sampling interval d in one measurement" has passed from measurement starting time t0+p1.

Schedule generation function part 202 prescribes "Repeat the acquiring (sampling) sensing data of sensor 6D" at "Sampling interval d in one measurement" of sensor information of sensor 6D. Schedule generation function part 202 refers to "Operation time Δ in one measurement" of sensor information of sensor 6D and prescribes "Finish measurement of sensing data with sensor 6D" at t0+p1+Δ.

As shown in Fig. 23 (C), schedule generation function part 202 refers to "Voltage input time q2 to sensor 6D" of sensor information of sensor 6D and prescribes "Finish inputting voltage (frequency signal) to sensor 6D and stop power supply (power supply OFF) to sensor 6D" at t0+q1+q2.

Sensor terminal 2 acquiring sensing data of sensor 6D is completed with the above-described processing sequence up to here.

Then schedule generation function part 202 refers to "Transmission time ts, te" of sensor information of sensor 6D and prescribes "Start transmission of acquired sensing data of sensor 6D" at t0+ts. Schedule generation function part 202 prescribes "Finish transmission of sensing data of sensor 6D" at t0+ts+te afterwards.

Schedule generation function part 202 prescribes "Preset count level CNTd stored at the top of address ADRd for schedule information of sensor 6D to a timer provided corresponding to sensor 6D, and start timer for the time measurement". The processing sequence to perform a measurement (sensing data acquisition and wireless transmission in this example) with sensor 6D is completed here. Scheduling table memory part 27T stores schedule information including processing sequence information of sensor 6D generated by schedule generation function part 202.

When a sensor or stand-alone power supply is disconnected from sensor connector part 21S or power supply connector part 21P, schedule information of the disconnected sensor or stand-alone power supply which is discriminated by sensor type discrimination part 23S or power supply type discrimination part 23P to be stored in schedule information storing part 27 is deleted.

[Schedule execution function part 203]

As described above, sensor terminal 2 is provided with a timer to count a predetermined intermittent measurement cycle for each sensor connected to sensor connector part 21S by schedule generation function part 202. Control part 20 of sensor terminal 2 is configured to operate schedule execution function part 203 by interrupt when the timer counts up to the preset intermittent measurement cycle.

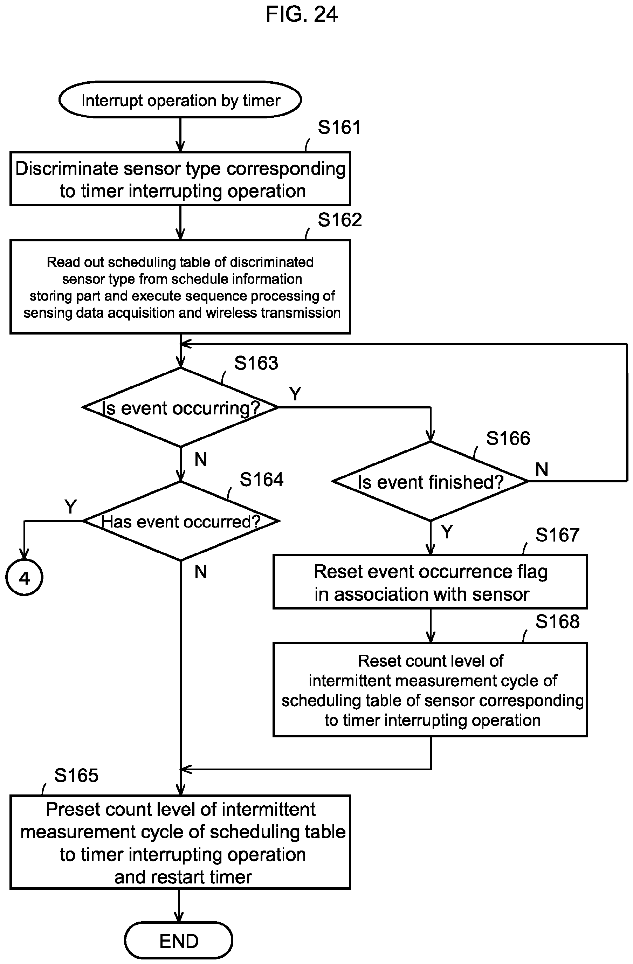

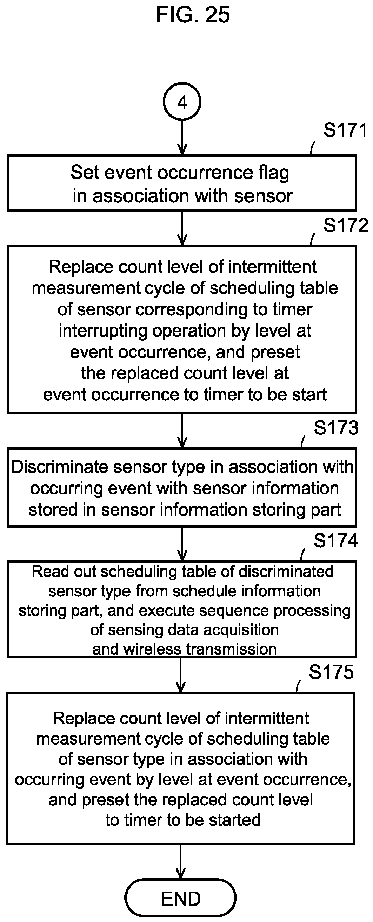

Schedule execution function part 203 operates as interrupted by a timer corresponding to the sensor connected to sensor connector part 21S as shown in the flowchart in Fig. 24 and Fig. 25.

Namely, schedule execution function part 203 discriminates a sensor type corresponding to the timer interrupting the operation (Step S161).

Then, schedule execution function part 203 reads out the scheduling table of the sensor type discriminated in Step S161 from schedule information storing part 27 and executes the sequence processing of sensing data acquisition from the sensor of the sensor type and wireless transmission (Step S162).

When the sequence processing of the sensing data acquisition and wireless transmission in Step S162, schedule execution function part 203 checks if a predetermined event of the sensor is occurring (Step S163). Such an event occurrence is performed by checking an event occurrence flag to be described later.

When no occurring event is found in Step S163, schedule execution function part 203 checks if a predetermined event of the sensor has occurred, according to presently acquired sensing data and previously acquired sensing data (Step S164).

When no event is found in Step S164, schedule execution function part 203 presets the count level stored at the top of scheduling table to the timer corresponding to the sensor and restarts the timer (Step S165). Then schedule execution function part 203 finishes the interrupt processing routine.

As shown with Step S171 in Fig. 25, schedule execution function part 203 sets a flag of event occurrence when an event occurrence is found in Step S164 (Step S171 of figure 25). Then schedule execution function part 203 replaces the count level of intermittent measurement cycle of scheduling table of the sensor corresponding to the timer interrupting the operation by the level at event occurrence, presets thus replaced count level to the timer interrupting the operation and restarts the timer (Step S172).

Schedule execution function part 203 discriminates a sensor of sensor type registered in association with the occurring event by referring to sensor information of sensor stored in information storing part 24S (Step S173). Then, schedule execution function part 203 reads out the scheduling table of the sensor type discriminated in Step S173 from schedule information storing part 27 and executes the sequence processing of sensing data acquisition from the sensor of the sensor type and wireless transmission (Step S174).

Then schedule execution function part 203 replaces the count level of intermittent measurement cycle of scheduling table of the sensor of which sensor type is registered in association with the occurring event by the level at event occurrence, presets thus replaced count level to the timer interrupting the operation and restarts the timer (Step S175). Then the interrupt processing routine is finished.

When an occurring event is found in Step S163, schedule execution function part 203 checks if the predetermined event of the sensor has finished according to presently acquired sensing data and previously acquired sensing data (Step S166). When the event is found having not finished in Step S166, schedule execution function part 203 returns processing to Step S163 and repeats the processing after Step S163.

When the event is found to have finished in Step S166, schedule execution function part 203 resets the flag of the predetermined event in association with the sensor to a normal state without event occurrence (Step S167). Schedule execution function part 203 resets the count level of intermittent measurement cycle of scheduling table of the sensor corresponding to the timer interrupting the operation to a normal state without event occurrence (Step S168).

Schedule execution function part 203 progressed the processing to Step S165, presets the count level stored at the top of scheduling table to the timer corresponding to the sensor, restarts the timer and then finishes the interrupt processing routine.

When a plurality of timers interrupt the operation at the same time in the above-described interrupt processing, Step S162 and the following processing are executed with sensors in order of priority of sensor information stored in sensor information storing part 24S.

The wireless transmission in the sequence processing by schedule execution function part 203 is performed by wireless transmission part 28. Wireless transmission part 28 wirelessly transmits information which has been subject to a predetermined modulation.

However, the communication between sensor terminal 2 and relay device 3 is asynchronous and sensor terminals 2 as many as 1,000 can be provided in monitored area 1, and therefore it should be considered that the starting timings of intermittent transmission from many sensor terminals 2 might be coincident to make the transmission signals interfere to each other. With such a interference between the transmission signals, sensing data of sensor terminals 2 could not be received to deteriorate reliability of monitoring result by monitoring center device 5.

Accordingly, each sensor terminal 2 has a randomizer (not shown) to generate random values to determine the starting timing of the intermittent transmission so that the starting timings of the intermittent transmission are not coincident in this embodiment. Namely, the schedule information is generated as described above but the start timing is shifted from a value obtained by counting the intermittent measurement cycle with a counter according to random values generated by the randomizer.

To improve reliability to surely receive transmission signals from sensor terminal 2 by relay device 3, sensor terminals 2 send the same information as transmission signals having different frequency bands several times by time division in this embodiment. Specifically in the intermittent transmission term, sensor terminal 2 sends out transmission information in 315MHz band or the like and then sends out the same transmission information in 920MHz band or the like in this embodiment.

[Variation examples]

Sensor connector part 21S may be provided with a single connector jack capable of connecting a plurality of sensors although it has been provided with a plurality of connector jacks 21S1 - 21S4 so that a plurality of sensors are connected at the same time in the above-described embodiments. Even in that case, sensor terminal 2 discriminates the type of sensor connected to sensor connector part 21S with sensor type discrimination part 23S and generate sensing data acquisition schedule of the connected sensor and wireless transmission schedule as well. The above-described variation example is applicable to power supply connector part 21P as well as sensor connector part 21S.

The sensor and stand-alone power supply may be connected to a common connector part although the connector part has been separated into sensor connector part 21S and power supply connector part 21P in the above-described embodiments. In that case, the recessed part terminal of pin jack for sensor type discrimination is provided at a position different from that of the recessed part terminal of pin jack for power supply type discrimination.

In the above-described embodiments, the sensing data acquisition from sensors 6A - 6D has been successively synchronized with the wireless transmission of the acquired sensing data. However, the sensing data acquisition from sensors 6A - 6D and the wireless transmission of the acquired sensing data may be performed separately at different start timings without synchronization. In that case, sensor terminal 2 should have two kinds of schedule information, one for sensing data acquisition from sensors 6A - 6D and the other for wireless transmission of the acquired sensing data. Further, the intermittent measurement cycle should be separated between the sensing data acquisition and the wireless transmission of the acquired sensing data, and therefore each timer should be provided for each measurement. Furthermore, one schedule information for the sensing data acquisition should include a preset count level for a timer determining the intermittent data acquisition start timing while the other schedule information for the wireless transmission should include a preset count level for another timer determining the intermittent transmission start timing.

When the sensing data acquisition and the wireless transmission are performed according to different schedules, sensing data may be acquired with sensors at the same timing although the sensing data has been acquired from each sensor separately at each timing in the above-described embodiments.

In the above-described embodiments, the intermittent measurement cycle has been determined as an intermittent measurement start timing by counting the intermittent measurement cycle with timers corresponding to sensors 6A - 6D in the schedule of sensing data acquisition from sensors 6A - 6D and wireless transmission. However, instead of providing the timers corresponding to sensors 6A - 6D, it is possible that the time of a clock circuit is set according to the intermittent measurement cycles of sensors 6A - 6D so that sensing data acquisition timings and wireless transmission start timing are prescribed with the clock time. In that case, the next measurement starting time is recalculated according to "Measurement frequency (interval)" of sensor information to be reregistered as schedule information when the previous measurement (sensing data acquisition, wireless transmission) is finished. Such processes are applicable to a case where the sensing data acquisition from sensors 6A - 6D and the wireless transmission of the acquired sensing data are performed separately at different start timings without synchronization.

[Other examples of sensor type discrimination and power supply type discrimination]

In the above-described embodiments, sensor types and power supply types have been discriminated by mechanical connection between the connector jack and connector plug configured differently depending on types. Such a mechanical connection may be configured as various ways, as well as the above-described configuration with different engagement positions between the protrusion and recessed part.

Further, sensor types or power supply types may be discriminated by different configuration other than the mechanical connection of the connectors. Hereinafter, examples will be explained other than the method discriminating by the mechanical connection of connectors.

<First other example>

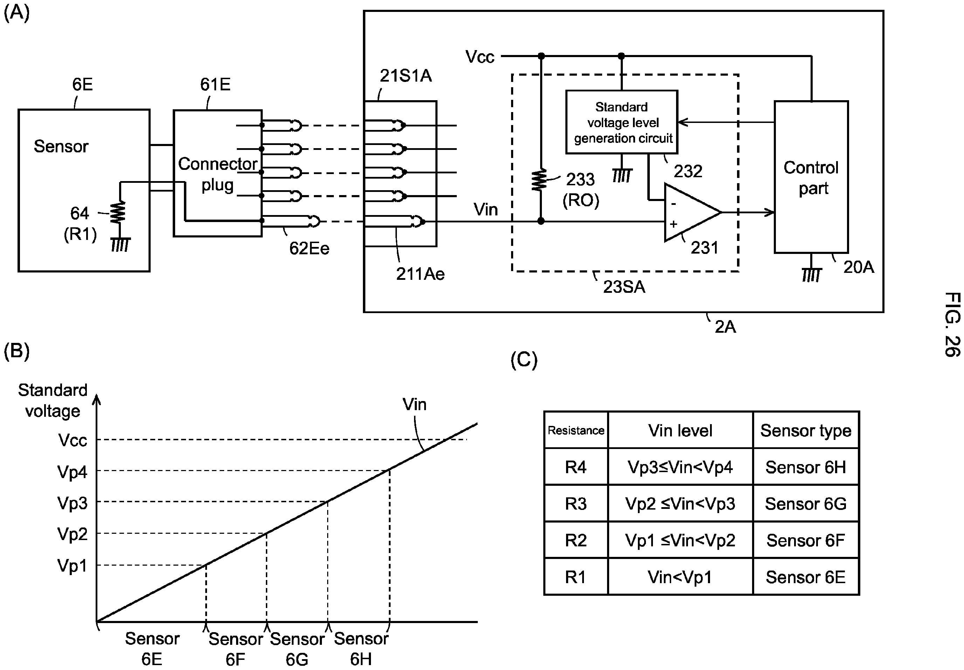

Fig. 26 shows the first example to discriminate sensor type electrically with the same mechanical connection between the connector jack and connector plug. Fig. 26 (A) shows a configuration of connection between sensor terminal 2A and sensor 6E. Fig. 26 (A) shows connector jack 21S1A representatively among sensor connector parts of sensor terminal 2A, and the other connector jacks have a similar configuration.

In Fig. 26 (A), connector jack 21S1A of the sensor connector part of sensor terminal 2A comprises pin jack 211Ae for type discrimination as well as four pin jacks consisting of a pair of pin jacks for power supply, a pin jack for sensing data and a pin jack for control signals like the above-described embodiments. In Fig. 26 (A), pin jack 211Ae for type discriminating has the same configuration among different types of sensor connector plugs. For simple explanation, Fig. 26 (A) shows pin jack 211Ae for type discrimination having a hole longer than holes of the other pin jacks. All holes of the pin jacks may have the same length. Connector plug 61E connected to sensor 6E has five pin plugs corresponding to connector jack 21S1A. One of the pin plugs is pin plug 62Ee for type discrimination to engage with pin jack 211Ae for type discrimination.

Fig. 26 (A) shows pin plug 62Ee for type discrimination is connected to a ground terminal of sensor 6E through resistor 64 having predetermined resistance level Rx.

On the other hand, sensor type discrimination part 23SA of sensor terminal 2A comprises voltage comparator 231, standard voltage level generation circuit 232 and resistor 233. Pin jack 211Ae for type discrimination is connected to power supply terminal Vcc through resistor 233. Standard voltage level is provided from standard voltage level generation circuit 232 to one input terminal of voltage comparator 231. To the other input terminal of voltage comparator 231, voltage level Vin of the connection point between resistor 233 and pin jack 211Ae for type discrimination is provided.

Standard voltage level generation circuit 232 is controlled to generate one of plurality of predetermined standard voltage level according to control signals from control part 20A. In a case of discriminating four types of sensors 6E, 6F, 6G and 6H having the same configuration, standard voltage level generation circuit 232 is configured to generate one of four kinds of standard voltage levels Vp1, Vp2, Vp3 and Vp4 as shown in Fig. 26 (B). The magnitude relation of four kinds of standard voltage levels Vp1, Vp2, Vp3 and Vp4 is selected as shown by "Vp1 < Vp2 < Vp3 < Vp4".

In this example, the resistance level of resistor 233 of sensor type discrimination part 23SA of sensor terminal 2A is predetermined fixed resistance level R0. On the other hand, resistance levels Rx of resistor 64 connected between the pin plug for type discrimination and the ground terminal of four types of sensors 6E, 6F, 6G and 6H are selected as different resistance levels R1, R2, R3 and R4. In this example, the magnitude relation of resistance levels R1, R2, R3 and R4 is selected as shown by "R1 < R2 < R3 < R4".

When a sensor plug of any one of sensors 6E - 6H is connected to sensor connector part 21S1A of sensor terminal 2A, voltage level Vin of the connection point between resistor 233 and pin jack 211Ae for type discrimination is a partial voltage between resistance level R0 of resistor 233 and resistance level Rx (one of R1 - R4) of resistor 64. Namely, the following formula is satisfied.

$$Vin = Vcc, Rx / (R0+Rx)$$

In this example, the magnitude relation of resistance levels R1, R2, R3 and R4 is selected as shown by "R1 < R2 < R3 < R4" while satisfying the relation of table shown in Fig. 26 (C). Sensor type discrimination part 23SA compares voltage level Vin with the standard voltage level generated by standard voltage level generation circuit 232 with voltage comparator 231 while control part 20A changes the standard voltage level sequentially to Vp1, Vp2, Vp3 and Vp4. Control part 20A acquires comparison output from voltage comparator 231 according to the standard voltage level change and discriminates ranges of the table shown in Fig. 26 (C) including voltage level Vin according to the comparison output, so that the connected sensor is discriminated among sensors 6E - 6H from the discrimination result.

This first example has a merit that the connector plugs can be connected to a sensor regardless of sensor type.

The first example is applicable to stand-alone power supply type discrimination as well.

<Second other example>

In the above-described methods of sensor type discrimination and power supply type discrimination, the connector jack and connector plug are provided with a pin jack and pin plug for type discrimination. In the second other example, the connector jack and connector plug don't have to be provided with a pin jack and pin plug for type discrimination.

In the second other example, each sensor comprises type ID generation part to generate type identifier information (type ID) showing sensor types. When each sensor is connected to a sensor terminal, electric power is supplied from the sensor terminal so that a type ID generated by a type ID generation part is provided to the sensor terminal. The sensor terminal receives the type ID from the sensor connected to a sensor connector part to discriminate sensor types.

The second example is applicable to stand-alone power supply type discrimination as well.

<Third other example>

In the third other example, the connector jack and connector plug don't have to be provided with a pin jack and pin plug for type discrimination.

In this third other example, the sensor terminal preliminarily registers pattern data of sensing data of sensor to be connected to a sensor connector part. When the sensor is connected to the sensor connector part, the sensing data pattern of the sensor is compared with the registered pattern to discriminate sensor types.

The third example is applicable to stand-alone power supply type discrimination as well.

<Other examples>

In the above-described example, connector plugs of sensors can be connected to any one of connector jacks of a sensor connector part. In contrast, connectable sensor can be limited to predetermined type depending on each position of connector jacks of the sensor connector part. In that case, the sensor terminal discriminates sensor types of the connected sensor according to the connector jack connected.

[Effect of sensor terminal in the embodiments]

In the above-described embodiments, when a sensor is connected to sensor connector part 21S of sensor terminal 2, sensor terminal 2 automatically generates the schedule information of the sensing data acquisition according to sensor types of the connected sensor and wireless transmission, and automatically start to control the processing of sensing data acquisition of the connected sensor and wireless transmission according to thus generated schedule information. Therefore, operator's manual settings according to the type of connected sensor are not required. By only connecting a sensor to a sensor terminal, the sensing data acquisition and wireless transmission can be realized by so-called plug and play.

In the above-described embodiments, sensor terminal has sensor connector part 21S provided with connector jacks having a configuration common to a plurality of sensors so that the sensors can be connected to any one of connector jacks of the sensor connector part 21S.

In the above-described embodiments, sensor terminal 2 is configured to store sensor information into sensor information storing part 24S through input terminal 25. Therefore, even in a case where a new type of sensor is to be additionally connected to the sensor terminal, the sensor information of the new sensor type can be stored in sensor information storing part 24S through information input terminal 25, so that the sensing data acquisition and wireless transmission is realized by so-called plug and play by only connecting the new type of sensor to sensor connector part 21S.

Further, sensor information of the sensor type not to be connected doesn't have to be stored in sensor information storing part 24S. Furthermore, the number of sensor types connectable to the sensor terminal can be no less than the number of connector jacks of sensor connector part 21S, when sensor information of sensor types no less than the number of connector jacks of sensor connector part 21S is stored in sensor information storing part 24S.

In the above-described embodiments, sensor terminal 2 can receive and acquire the sensing data, regardless of the difference between analog data and digital data, from the connected sensor. Namely, control part 20 of sensor terminal 2 can determine if the sensing data is analog data or digital data according to the sensor type discriminated, and switch the input interface processing for either analog data or digital data according to the determination result. Therefore, various sensor types can be connected to the sensor terminal because both digital data and analog data can be accepted as sensing data of the sensor.

Different types of stand-alone power supplies can be connected to sensor terminal 2 without setting according to power supply types. Sensor terminal 2 can achieve so-called plug and play in terms of power supply management of stand-alone power supplies because power management schedule is automatically generated according to connected stand-alone power supply types.

A plurality of types of stand-alone power supplies can be connected to sensor terminal 2 at the same time while one of them is used as a main power supply so that the other stand-alone power supplies used as auxiliary power supplies can be switched to the main supply as needed by charging. The power supply management is performed according to a schedule generated for each type of connected stand-alone power supply. Accordingly, the power management can be performed with a merit that a plurality of types of stand-alone power supplies can be connected at the same time.

In the above-described embodiments of sensor network system, a relay device sends the received signal from sensor terminals 2 with additional receiving time information of the received signal to monitoring center device 5, so that monitoring center device 5 regards the time information added by relay device 3 as acquisition time of sensing data included in the transmission signal from sensor terminals 2. Therefore, time information does not need to be added to the transmission signal from sensor terminal 2.

In the above-described embodiments, relay device 3 detects radio field intensity when receiving the signal from sensor terminal 2 and adds the radio field intensity information to the signal received from sensor terminal 2 to be sent to monitoring center device 5 which estimates a position of sensor terminal 2 in monitored area 1 from the radio field intensity information. Therefore, positional information of sensor terminal 2 does not need to be added to the transmission signal from sensor terminal 2.

In the above-described embodiments, the transmission signal from sensor terminal 2 does not include the sensing data acquisition time information and positional information of sensor terminal 2, and therefore is configured as a very short sentence consisting of minimum necessary identification information and sensing data. Therefore, even when many sensor terminals 2 in monitored area 1 wirelessly transmit the transmission data at a predetermined intermittent cycle, the wireless transmission of transmission data from sensor terminal 2 can easily be dispersed in the intermittent cycle so that the transmission data is wirelessly transmitted without conflict to each other.

[Other embodiments or variation examples]

Although sensor terminal 2 hasn't had any receiving function to receive a receipt confirmation signal from relay devices in the above-described embodiments, sensor terminal 2 can be provided with receiving function, and configured to resend sensing data in case it fails to receive the receipt confirming signal from counterpart devices of transmission signal. Although the communication between sensor terminal 2 and counterpart devices of transmission hasn't be synchronized in the above-described embodiments, synchronized communication can be performed by sending the sensing data to the counterpart device after sensor terminal 2 sends a timing signal required for synchronization.

Although stand-alone power supplies have been provided with a power generation circuit for solar-battery power-generation or vibration-power-generation in the above-described embodiments, the stand-alone power supply may be a battery such as dry cell battery and lithium ion battery.

Sensor terminal 2 is applicable to various sensor network system as well as the sensor network system shown in Fig. 1.

Explanation of symbols

1: monitored area,
2 ($2_1$-$2_n$): sensor terminal
3 ($3_1$-$3_m$): relay device
4: communications network
5: monitoring center device
6A - 6D: sensor
7A, 7B: stand-alone power supply
20: control part
21S: sensor connector part
21S 1 - 21S4: connector jack
21P: power supply connector part
22S: sensor interface
22P: power supply interface
23S: sensor type discrimination part
23P: power supply type discrimination part
24S: sensor information storing part
24P: stand-alone power supply information storing part
25: information input terminal
26: power supply circuit
27: schedule information storing part
28: wireless transmission part
61A - 61D: connector plug
71A, 71B: connector plug
201: power supply management function part
202: schedule generation function part
203: schedule execution function part

**Claims**

1. A sensor terminal ($2_1$-$2_n$) that is driven by a stand-alone power supply and is capable of connecting different types of sensors (6A, 6B, 6C, 6D), acquiring and wirelessly transmitting a sensing data of the connected sensor, comprising:

   a sensor connector part (21S) capable of connecting the sensors;
   a condition information storing part that stores a condition information to generate a schedule information of intermittently acquiring the sensing data of each of the sensors and transmitting the acquired sensing data;
   a sensor type discrimination means (23S) for discriminating a sensor type of the sensor connected to the sensor connector part (21S) to output a sensor type discrimination result;
   a schedule information storing part (27) that stores the schedule information of the connected sensor;
   a schedule generation means for generating a schedule information by receiving the sensor type discrimination result of the sensor type from the sensor type discrimination means and acquiring the condition information of the connected sensor stored in the condition information storing part according to the sensor type discrimination result; and
a control means for controlling to acquire the sensing data and wirelessly transmit the acquired sensing data according to the schedule information stored in the schedule information storing part (27).

2. The sensor terminal according to claim 1, wherein the control means controls to wirelessly transmit a transmission signal including the acquired sensing data, an identifier identifying the sensor type and another identifier identifying the sensor terminal.

3. The sensor terminal according to claim 1 or 2, capable of wirelessly transmitting the sensing data but incapable of receiving a data.

4. The sensor terminal according to any one of claims 1 to 3, further comprising a terminal part through which the condition information is input externally.

5. The sensor terminal according to any one of claims 1 to 4, further comprising:

   a power supply connector part capable of connecting different types of the stand-alone power supplies;
   a power supply type information storing part that stores an information of each of the power supplies;
   a power supply type discrimination means for discriminating a power supply type of the power supply connected to the power supply connector part to output a power supply type discrimination result; and
   a determination means that receives the power supply type discrimination result from the power supply type discrimination means and determines if the connected power supply is used as a main power supply or an auxiliary power supply according to the information stored in the power supply type information storing part corresponding to the power supply type discrimination result.

6. The sensor terminal according to any one of claims 1 to 5, wherein the condition information storing part stores an event defined according to the sensing data of the connected sensor, wherein
the schedule information storing part stores the schedule information at an event occurrence to be used when the event occurrence is detected, wherein
the control means controls to acquire the sensing data and wirelessly transmit the acquired sensing data according to the schedule information at the event occurrence when the event occurrence is detected according to the sensing data.

7. The sensor terminal according to any one of claims 1 to 6, wherein the sensor connector part is provided with a connector terminal capable of connecting the sensor by a connection configuration that is mechanically different from another connection configuration of another type of sensor, wherein
the sensor type discrimination means discriminates the sensor type by detecting a signal obtained according to the mechanical difference between the connection configurations.

8. The sensor terminal according to any one of claims 1 to 6, wherein the sensor type discrimination means discriminates the sensor type according to the sensing data of the connected sensor.

9. The sensor terminal according to any one of claims 1 to 6, wherein the connected sensor sends an identifier of the sensor type to the sensor type discrimination means, wherein
the sensor type discrimination means discriminates the sensor type according to the identifier sent from the connected sensor.

**Patentansprüche**

1. Sensoranschluss ($2_1$ bis $2_n$), der von einer unabhängigen Stromversorgung betrieben wird und in der Lage ist, verschiedene Arten von Sensoren (6A, 6B, 6C, 6D) zu verbinden, sowie Sensordaten des verbundenen Sensors zu beziehen und drahtlos zu übertragen, mit:

einem Sensorverbindungsbauteil (21S), das in der Lage ist, die Sensoren zu verbinden;
einem Zustandsinformationsspeicherbauteil, das Zustandsinformationen zur Erzeugung von Zeitplaninformationen zum intermittierenden Beziehen der Sensordaten von jedem der Sensoren und zum Übermitteln der bezogenen Sensordaten speichert;
einer Sensorbauartunterscheidungseinrichtung (23S) zur Unterscheidung einer Sensorbauart des mit dem Sensorverbindungsbauteil (21S) verbundenen Sensors zur Ausgabe eines Sensorbauartunterscheidungsergebnisses;
einem Zeitplaninformationsspeicherbauteil (27), das die Zeitplaninformationen des verbundenen Sensors speichert;
einer Zeitplanerzeugungseinrichtung zur Erzeugung von Zeitplaninformationen durch Empfangen des Sensorbauartunterscheidungsergebnisses der Sensorbauart von der Sensorbauartunterscheidungseinrichtung, und Beziehen der Zustandsinformationen des verbundenen Sensors, die in dem Zustandsinformationsspeicherbauteil entsprechend dem Sensorbauartunterscheidungsergebnis gespeichert sind; und
einer Steuereinrichtung zur Steuerung des Bezugs der Sensordaten und der drahtlosen Übermittlung der bezogenen Sensordaten entsprechend den Zeitplaninformationen, die in dem Zeitplaninformationsspeicherbauteil (27) gespeichert sind.

2. Sensoranschluss nach Anspruch 1, wobei die Steuereinrichtung eine drahtlose Übermittlung eines Übermittlungssignals steuert, das die bezogenen Sensordaten, ein die Sensorbauart identifizierendes Identifikationsmerkmal und ein anderes den Sensoranschluss identifizierendes Identifikationsmerkmal umfasst.

3. Sensoranschluss nach Anspruch 1 oder 2, der in der Lage ist, die Sensordaten drahtlos zu übermitteln, jedoch nicht in der Lage ist, Daten zu empfangen.

4. Sensoranschluss nach einem der Ansprüche 1 bis 3, ferner mit einem Anschlussbauteil, durch das die Zustandsinformationen von extern eingegeben werden.

5. Sensoranschluss nach einem der Ansprüche 1 bis 4, ferner mit:

einem Stromversorgungsverbindungsbauteil, das in der Lage ist, verschiedene Arten von unabhängigen Stromversorgungen zu verbinden;
einem Stromversorgungsbauartinformationsspeicherbauteil, dass Informationen über jede der Stromversorgungen speichert;
einer Stromversorgungsbauartunterscheidungseinrichtung zur Unterscheidung einer Stromversorgungsbauart der zu dem Stromversorgungsverbindungsbauteil verbundenen Stromversorgung zur Ausgabe eines Stromversorgungsbauartunterscheidungsergebnisses; und
einer Unterscheidungseinrichtung, die das Stromversorgungsbauartunterscheidungsergebnis von der Stromversorgungsbauartunterscheidungseinrichtung empfängt, und bestimmt, ob die verbundene Stromversorgung als eine Hauptstromversorgung oder eine Hilfsstromversorgung gemäß der in dem Stromversorgungsbauartinformationsspeicherbauteil gespeicherten Informationen entsprechend dem Stromversorgungsbauartunterscheidungsergebnis verwendet wird.

**6.** Sensoranschluss nach einem der Ansprüche 1 bis 5, wobei das Zustandsinformationsspeicherbauteil ein Ereignis speichert, das gemäß den Sensordaten des verbundenen Sensors definiert ist, wobei

das Zeitplaninformationsspeicherbauteil Zeitplaninformationen zu einem Ereigniseintritt speichert, die zu verwenden sind, falls der Ereigniseintritt erfasst wird, wobei die Steuereinrichtung das Beziehen der Sensordaten und ein drahtloses Übermitteln der bezogenen Sensordaten gemäß den Zeitplaninformationen zu dem Ereigniseintritt steuert, falls der Ereigniseintritt gemäß den Sensordaten erfasst wird.

**7.** Sensoranschluss nach einem der Ansprüche 1 bis 6, wobei das Sensoranschlussbauteil mit einem Verbindungsanschluss bereitgestellt ist, der in der Lage ist, den Sensor durch eine Verbindungskonfiguration zu verbinden, die zu einer anderen Verbindungskonfiguration einer anderen Bauart von Sensoren mechanisch unterschiedlich ist, wobei die Sensorbauartunterscheidungseinrichtung die Sensorbauart durch Erfassen eines Signals unterscheidet, dass entsprechend dem mechanischen Unterschied zwischen den Verbindungskonfigurationen erlangt ist.

**8.** Sensoranschluss nach einem der Ansprüche 1 bis 6, wobei die Sensorbauartunterscheidungseinrichtung die Sensorbauart gemäß den Sensordaten des verbundenen Sensors unterscheidet.

**9.** Sensoranschluss nach einem der Ansprüche 1 bis 6, wobei der verbundene Sensor ein Identifizierungsmerkmal der Sensorbauart zu der Sensorbauartunterscheidungseinrichtung sendet, wobei die Sensorbauartunterscheidungseinrichtung die Sensorbauart gemäß dem von dem verbundenen Sensor gesendeten Identifizierungsmerkmal unterscheidet.

**Revendications**

**1.** Terminal de capteur ($2_1$ à $2_n$) qui est alimenté par une alimentation électrique autonome et qui peut se connecter à différents types de capteurs (6A, 6B, 6C, 6D), acquérir et transmettre sans fil des données de détection du capteur connecté, comprenant :

une partie connecteur de capteur (21S) pouvant connecter les capteurs ; une partie de stockage d'informations d'état qui stocke des informations d'état pour produire des informations d'ordonnancement d'acquisition intermittente des données de détection de chacun des capteurs et de transmission des données de détection acquises ; un moyen de discrimination de type de capteur (23S) destiné à distinguer un type de capteur du capteur connecté à la partie connecteur de capteur (21S) pour délivrer un résultat de discrimination de type de capteur ; une partie de stockage d'informations d'ordonnancement (27) qui stocke les informations d'ordonnancement du capteur connecté ; un moyen de génération d'ordonnancement destiné à produire des informations d'ordonnancement en recevant le résultat de discrimination de type de capteur sur le type de capteur en provenance du moyen de discrimination de type de capteur et en acquérant les informations d'état du capteur connecté, stockées dans la partie de stockage d'informations d'état en fonction du résultat de discrimination de type de capteur ; et un moyen de commande destiné à commander l'acquisition des données de détection et la transmission sans fil des données de détection acquises en fonction des informations d'ordonnancement stockées dans la partie de stockage d'informations d'ordonnancement (27).

**2.** Terminal de capteur selon la revendication 1, dans lequel le moyen de commande commande la transmission sans fil d'un signal de transmission incluant les données de détection acquises, un identifiant identifiant le type de capteur et un autre identifiant identifiant le terminal de capteur.

**3.** Terminal de capteur selon la revendication 1 ou 2, pouvant transmettre sans fil les données de détection, mais ne pouvant pas recevoir des données.

**4.** Terminal de capteur selon l'une quelconque des revendications 1 à 3, comprenant en outre une partie de terminal par l'intermédiaire de laquelle les informations d'état sont introduites depuis l'extérieur.

**5.** Terminal de capteur selon l'une quelconque des revendications 1 à 4, comprenant en outre :

une partie connecteur d'alimentation électrique pouvant se connecter à différents types des alimentations électriques autonomes ; une partie de stockage d'informations de type d'alimentation électrique qui stocke une information sur chacune des alimentations électriques ; un moyen de discrimination de type d'alimentation électrique destiné à distinguer un type d'alimentation électrique de l'alimentation électrique connectée à la partie connecteur d'alimentation électrique pour délivrer un résultat de discrimination de type d'alimentation électrique ; et un moyen de détermination qui reçoit le résultat de discrimination de type d'alimentation électrique en provenance du moyen de discrimination de type d'alimentation électrique et détermine si l'alimentation électrique connectée est utilisée en tant qu'alimentation électrique principale ou en tant qu'alimentation électrique auxiliaire, en fonction des informations stockées dans la partie de stockage d'informations de type d'alimentation électrique correspondant au résultat de discrimination de type d'alimentation électrique.

6. Terminal de capteur selon l'une quelconque des revendications 1 à 5, dans lequel la partie de stockage d'informations d'état stocke un événement défini en fonction des données de détection du capteur connecté, dans lequel :

la partie de stockage d'informations d'ordonnancement stocke les informations d'ordonnancement à la survenance d'un événement à utiliser lorsque la survenance de l'événement est détectée, dans lequel :

le moyen de commande commande l'acquisition des données de détection et la transmission sans fil des données de détection acquises en fonction des informations d'ordonnancement à la survenance de l'événement, lorsque la survenance de l'événement est détectée en fonction des données de détection.

7. Terminal de capteur selon l'une quelconque des revendications 1 à 6, dans lequel la partie connecteur de capteur est pourvue d'une borne de connecteur pouvant se connecter au capteur au moyen d'une configuration de connexion qui est mécaniquement différente d'une autre configuration de connexion d'un autre type de capteur, dans lequel :

le moyen de discrimination de type de capteur distingue le type de capteur en détectant un signal obtenu en fonction de la différence mécanique entre les configurations de connexion.

8. Terminal de capteur selon l'une quelconque des revendications 1 à 6, dans lequel le moyen de discrimination de type de capteur distingue le type de capteur en fonction des données de détection du capteur connecté.

9. Terminal de capteur selon l'une quelconque des revendications 1 à 6, dans lequel le capteur connecté envoie un identifiant du type de capteur au moyen de discrimination de type de capteur, dans lequel :

le moyen de discrimination de type de capteur distingue le type de capteur en fonction de l'identifiant envoyé en provenance du capteur connecté.

# FIG. 1

FIG. 2

(A) From sensor terminal 2 to Relay device

DA transmission data

| Terminal ID | Sensor ID | Sensing data |
|---|---|---|

(B) From relay device to Monitoring center device

| Data size | Flag information | Terminal ID | Relay ID | Receiving time | Radio field intensity | Power supply condition | Sensor ID | Sensing data |
|---|---|---|---|---|---|---|---|---|

FIG. 3

## FIG. 4

## FIG. 5

FIG. 6

FIG. 7

## FIG. 8

# [ Sensor information storing part ]

| Sensor type | Sensor 6A (Current sensor) | Sensor 6B (IR array sensor) | Sensor 6C ($CO_2$ gas sensor) | Sensor 6D (VOC sensor) |
|---|---|---|---|---|
| Operating power supply voltage | 1.8V | 1.8V | 1.8V | 1.8V |
| Electric current in operation | 4µA | 8µA | 8µA | 8µA |
| Measurement frequency (interval) dd | Measured every 60sec | Measured every 300sec | Measured every 120sec | Measured every 120sec |
| Transmission time ts, te | 120sec, 3msec | 120sec, 3msec | 150sec, 3msec | 120sec, 3msec |
| Output data type | Analog | Digital | Digital | Digital |
| Required waiting time p1 | 125msec | 100msec | 150msec | 150msec |
| Sampling interval d In one measurement | 10sec | 5sec | 10sec | 5sec |
| Operating time Δ In one measurement | 60sec | 30sec | 60sec | 60sec |
| Priority rank | A | B | C | D |
| Presence/absence of input to input terminal | | Absence of input | Presence of input | Presence of input |
| Voltage level input to input terminal | | | 1.2V | 1.2V |
| Voltage input time to input terminal q1, q2 | | | 100sec, 20msec | 120sec, 61msec |
| Measurement frequency at event occurrence | | 5 times | | 4 times |
| Associated sensor type | | $CO_2$ gas sensor | | $CO_2$ gas sensor |

FIG. 9

EP 2 975 587 B1

## FIG. 10

## FIG. 11

## FIG. 12

Stand-alone power supply information storing part

| Power supply type | Solar-power generation | Vibration-power generation |
|---|---|---|
| Supply voltage at full charge | 1.8V | 1.8V |
| Power supply voltage limit level | 1.2V | 1.2V |
| Power storage device leak characteristic | 1.0μA / hour | 1.0μA / hour |
| Power generation characteristic (power generation amount) | 0.5μW / lux (about 10cm$^2$) | 100μW / g (about 25cm$^2$) |
| Electric discharge characteristic | 0.005μC / V | 0.005μC / V |
| Output terminal definition | Illumination (lux) | Acceleration (g) |
| Input terminal definition | | Converted voltage level change |
| Priority | High | Low |

## FIG. 13

# FIG. 14

```
        Power supply
        management

  ②  ────────────────►

                    S101
            Is stand-alone
          power supply connected to          N
          power supply connector    ──────────────►  ③
                part?

                 Y      S102

        Recognize connector jack connecting
          stand-alone power supply and
          stand-alone power supply type

                        S103
                Is other
    N     stand-alone power supply
  ◄────── already registered as main
            power supply?
  S104
                         Y       S105
  Register as
  main power supply
                     Is priority rank higher?        N
                                                      │
                          Y                           ▼      S107

                                          Register as AUX power supply
              S106                           Switching circuit OFF

        Renew previous main power supply
            to AUX power supply

                        ①
```

# FIG. 15

(1)

S111

Calculate possibility to maintain main stand-alone power supply registration according to main power supply information stored in stand-alone power supply information storing part and stand-alone power information

S112

Can main power supply be maintained?

Y

N

S113

Is AUX power supply registered?

N

Y

S114

Turn ON switch circuit connecting AUX stand-alone power supply

S115

Change registration between main and AUX power supplies

S116

Turn OFF switch circuit of new AUX stand-alone power supply

S117

Change registration from main to AUX power supply

S118

Turn OFF switch circuit of new AUX stand-alone power supply

(2)

## FIG. 16

③

**S121**
Is found
registered main
power supply?
—Y→ ①

N

**S122**
Is found
registered AUX
power supply?
—N→

Y

**S123**
Acquire AUX power supply information
from stand-alone power supply
information storing part

**S124**
Calculate possibility to
change registration from
AUX to main power supply

**S125**
Can AUX power supply
be changed
to main power supply?
—N→ ②

Y

**S126**
Change registration from AUX
to main power supply

①

## FIG. 17

```
        ┌─────────────────────────────┐
        │    Solar-battery type        │
        │ stand-alone power supply     │
        └─────────────────────────────┘
                     │
    ┌───────────────▼─────────────────────┐
    │ │ Acquire main power supply information from      │── S131
    │ │ stand-alone power supply information storing part│
    │ └──────────────────┬──────────────────┘
    │ ┌──────────────────▼──────────────────┐
    │ │ Acquire illumination information from stand-alone│── S132
    │ │ power supply information storing part │
    │ └──────────────────┬──────────────────┘
    │ ┌──────────────────▼──────────────────┐
    │ │ Detect voltage level supplied from   │── S133
    │ │ power storage circuit                │
    │ └──────────────────┬──────────────────┘
    │ ┌──────────────────▼──────────────────┐
    │ │ Calculate residual charged electricity to be │── S134
    │ │ provided to stand-alone power supply  │
    │ └──────────────────┬──────────────────┘
    │ ┌──────────────────▼──────────────────┐
    │ │ Generate check result of capability of │── S135
    │ │ driving sensors and transmitting       │
    │ └──────────────────┬──────────────────┘
    └───────────────────┘
```

## FIG. 18

```
        ┌─────────────────────────────────┐
        │ Vibration-power-generation type  │
        │   stand-alone power supply       │
        └─────────────────────────────────┘
                     │
    ┌───────────────▼─────────────────────────────┐
    │ │ Acquire main power supply information from       │── S141
    │ │ stand-alone power supply information storing part│
    │ └──────────────────┬──────────────────────────┘
    │ ┌──────────────────▼──────────────────────────┐
    │ │ Acquire vibration frequency and acceleration information│── S142
    │ │ from stand-alone power supply information storing part  │
    │ └──────────────────┬──────────────────────────┘
    │ ┌──────────────────▼──────────────────────────┐
    │ │ Detect voltage level supplied from   │── S143
    │ │ power storage circuit                │
    │ └──────────────────┬──────────────────────────┘
    │ ┌──────────────────▼──────────────────────────┐
    │ │ Calculate optimum parameter of resonance circuit │── S144
    │ │ to be provided to stand-alone power supply        │
    │ └──────────────────┬──────────────────────────┘
    │ ┌──────────────────▼──────────────────────────┐
    │ │ Calculate residual charged electricity to be │── S145
    │ │ provided to stand-alone power supply          │
    │ └──────────────────┬──────────────────────────┘
    │ ┌──────────────────▼──────────────────────────┐
    │ │ Generate check result of capability of │── S146
    │ │ driving sensors and transmitting        │
    │ └──────────────────┬──────────────────────────┘
    └───────────────────┘
```

## FIG. 19

(A)

27 Schedule information storing part

| 27A | 27T |
|---|---|
| Address table memory part | Scheduling table memory part |

(B)

Address table memory part 27A

| Type identifier | Connector jack | Address |
|---|---|---|
| IDa (Sensor 6A) | Connector jack 21S1 | ADRa |
| IDb (Sensor 6B) | Connector jack 21S2 | ADRb |
| IDc (Sensor 6C) | Connector jack 21S3 | ADRc |
| IDd (Sensor 6D) | Connector jack 21S4 | ADRd |
| IDe (Stand-alone power supply 7A) | Connector jack 21P1 | ADRe |
| IDf (Stand-alone power supply 7B) | Connector jack 21P2 | ADRf |

(C)

Scheduling table memory part 27T

| Address | Stored contents |
|---|---|
| ADRa | Sensor 6A scheduling table |
| ADRb | Sensor 6B scheduling table |
| ADRc | Sensor 6C scheduling table |
| ADRd | Sensor 6D scheduling table |
| ADRe | Stand-alone power supply 7A scheduling table |
| ADRf | Stand-alone power supply 7B scheduling table |

# FIG. 20

Sensor connection detection
(interrupt)

S151

Discriminate sensor type

S152

Read out discriminated sensor type
stored in sensor information storing part

S153

Determine intermittent measurement cycle
of connected sensor and generate
schedule information to be stored
in schedule information storing part

S154

Is
associated sensor
connected?

N

Y

S155

Determine intermittent measurement cycle
on detecting predetermined event for
sensing data of associated sensor to be
stored in schedule information storing part

S156

Preset intermittent measurement cycle
to timer to start

END

## FIG. 21

(A)  Sensor 6A scheduling table  27T

|  | CNTa (CNTa') | Intermittent measurement cycle |
|---|---|---|
| t0 | 00:00:000 | Start power supply to sensor 6A |
| t0+p1 | 00:00:125 | Start measurement with sensor 6A |
| t0+p1+d | 00:10:125 | Acquire data of sensor 6A |
| +d | | <Repeat> |
| t0+p1+Δ | 01:00:125 | Finish measurement with sensor 6A power supply OFF |
| t0+ts | 02:00:000 | Start data transmission of sensor 6A |
| t0+ts+te | 02:00:003 | Finish data transmission of sensor 6A |
| +dd | | Start timer of intermittent measurement cycle |

(B)  24S

| Operating power supply voltage Vcc | 1.8V |
|---|---|
| Electric current in operation Ip | 4μA |
| Measurement frequency (interval) dd | Measured every 60sec |
| Transmission time ts, te | 120sec, 3msec |
| Output data type | Analog |
| Required waiting time p1 | 125msec |
| Sampling interval d in one measurement | 10sec |
| Operating time Δ In one measurement | 60sec |
| Priority rank | A |
| Presence/absence of input to input terminal | Absence of input |

(C)

Measurement   Transmission   → Time

t0   t0+p1   t0+p1+d   t0+p1+Δ   t0+ts   t0+ts+te

45

# FIG. 22

(A) Sensor 6C scheduling table

|  | CNTc (CNTc') | Intermittent measurement cycle |
|---|---|---|
| t0 | 00:00:000 | Start power supply to sensor 6C |
| t0+p1 | 00:00:150 | Start measurement with sensor 6C |
| t0+p1+d | 00:10:150 | Acquire data of sensor 6C |
| +d |  | <Repeat> |
| t0+p1+Δ | 01:10:150 | Finish measurement with sensor 6C power supply OFF |
| t0+q1 | 01:40:000 | Turn ON inputting voltage to sensor 6C |
| t0+q1+q2 | 02:00:000 | Turn OFF inputting voltage to sensor 6C |
| t0+ts | 02:30:000 | Start data transmission of sensor 6C |
| t0+ts+te | 02:30:003 | Finish data transmission of Sensor 6C |
| +dd |  | Start timer of intermittent measurement cycle |

(B)

Transmission

Measurement

t0   t0+p1

t0+p1+d

t0+p1+Δ

t0+q1

t0+q1+q2

t0+ts

t0+ts+te

Time

# FIG. 23

(A) Sensor 6d scheduling table

|  | CNTd (CNTd') | Intermittent measurement cycle |
|---|---|---|
| t0 | 00:00:000 | Start power supply to sensor 6D |
| t0+q1 | 00:00:120 | Turn ON inputting voltage to sensor 6D |
| t0+p1 | 00:00:150 | Start measurement with sensor 6D |
| t0+p1+d | 00:10:150 | Acquire data of sensor 6D |
| +d |  | <Repeat> |
| t0+p1+Δ | 01:00:150 | Finish measurement with sensor 6D |
| t0+q1+q2 | 01:01:000 | Turn OFF inputting voltage to sensor 6D Power supply OFF |
| t0+ts | 02:00:000 | Start data transmission of sensor 6D |
| t0+ts+te | 02:00:003 | Finish data transmission of Sensor 6D |
| +dd |  | Start timer of intermittent measurement cycle |

(B)

Transmission

Measurement

t0    t0+p1

t0+p1+d

t0+p1+Δ

t0+ts

t0+ts+te

Time

(C)

t0    t0+q1    t0+q1+q2

Time

# FIG. 24

Interrupt operation by timer

S161

Discriminate sensor type corresponding to timer interrupting operation

S162

Read out scheduling table of discriminated sensor type from schedule information storing part and execute sequence processing of sensing data acquisition and wireless transmission

S163

Is event occurring? — Y

N

S164

Has event occurred? — N

Y

4

S166

Is event finished? — N

Y

S167

Reset event occurrence flag in association with sensor

S168

Reset count level of intermittent measurement cycle of scheduling table of sensor corresponding to timer interrupting operation

S165

Preset count level of intermittent measurement cycle of scheduling table to timer interrupting operation and restart timer

END

# FIG. 25

④

S171

Set event occurrence flag
in association with sensor

S172

Replace count level of intermittent
measurement cycle of scheduling table
of sensor corresponding to timer
interrupting operation by level at
event occurrence, and preset
the replaced count level at
event occurrence to timer to be start

S173

Discriminate sensor type in association with
occurring event with sensor information
stored in sensor information storing part

S174

Read out scheduling table of discriminated
sensor type from schedule information
storing part, and execute sequence processing
of sensing data acquisition
and wireless transmission

S175

Replace count level of intermittent
measurement cycle of scheduling table
of sensor type in association with
occurring event by level at event occurrence,
and preset the replaced count level
to timer to be started

END

## FIG. 26

(A)

(B)

(C)

| Resistance | Vin level | Sensor type |
|---|---|---|
| R4 | Vp3≤Vin<Vp4 | Sensor 6H |
| R3 | Vp2≤Vin<Vp3 | Sensor 6G |
| R2 | Vp1≤Vin<Vp2 | Sensor 6F |
| R1 | Vin<Vp1 | Sensor 6E |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003131708 A
- JP 2012027519 A
- WO 2007102668 A1